# EUROPEAN PATENT APPLICATION

(11) **EP 4 116 939 A1**
(43) Date of publication of application: **11.01.2023**
(21) Application number: 21765144.7
(22) Date of filing: 18.01.2021
(51) Int. Cl.: G06T 19/00, G06F 3/01, G06F 3/0481

(54) **INFORMATION PROCESSING DEVICE AND INFORMATION PROCESSING METHOD, COMPUTER PROGRAM, AND AUGMENTED REALITY SENSING SYSTEM**

(30) Priority: 05.03.2020 JP 2020037555; 02.10.2020 JP 2020167589
(71) Applicant: Sony Group Corporation, Minato-Ku, Tokyo, 108-0075 (JP)
(72) Inventor: INOUE, Junki, Tokyo 108-0075 (JP); KIMURA, Jun, Tokyo 108-0075 (JP); SHIROMA, Shin, Tokyo 108-0075 (JP); ISHIKAWA, Tsuyoshi, Tokyo 108-0075 (JP); NAGANO, Keijiroh, Tokyo 108-0075 (JP); TAJIMA, Daisuke, Tokyo 108-0075 (JP); YAMANO, Ikuo, Tokyo 108-0075 (JP)
(74) Representative: D Young & Co LLP
(86) International application number: PCT/JP2021/001542
(87) International publication number: WO 2021/176861

(57) **Abstract**

An information processing device that processes information regarding augmented reality is provided.

An information processing device includes an acquisition unit configured to acquire a position of a hand of a user and a posture of a finger, and a control unit configured to control a display operation of a display device configured to display a virtual object with being superimposed on a real space, in which the control unit determines a hand interaction that the user is trying to perform, and a virtual object targeted by the hand interaction, on the basis of the position of the hand and the posture of the finger that have been acquired by the acquisition unit, and controls a behavior of the virtual object to be implemented in response to the hand interaction, on the basis of an attribute set for the virtual object.

## Description

### TECHNICAL FIELD

The technology disclosed in this specification (hereinafter, referred to as "the present disclosure") related to an information processing device, an information processing method, a computer program, and an augmented reality system that process information regarding augmented reality.

### BACKGROUND ART

As technologies that realize experience with realistic feeling, virtual reality (VR), augmented reality (AR), and mixed reality (MR) have become common. The VR is a technology of causing a virtual space to be perceived as reality. Furthermore, the AR is a technology of augmenting a real space viewed from a user, by adding information to a reality environment surrounding the user, or emphasizing, attenuating, or deleting information. Furthermore, the MR is a technology of mixing reality and imaginariness by displaying an imaginary object (hereinafter, will also be referred to as a "virtual object") replacing an object in a real space, for example. The AR and the MR are realized using a see-through head-mounted display (hereinafter, will also be referred to as an "AR glass"), for example. According to the AR technology, a virtual object can be displayed with being superimposed on a landscape in a real space that is observed by the user through an AR glass, a specific real object can be emphasized or attenuated, or a specific real object can be deleted and shown as if the specific real object did not exist. Furthermore, an information processing device that presents contact between a reality object (a finger of a user, etc.) and an imaginary object to the user has been proposed (for example, refer to Patent Document 1).

### CITATION LIST

### PATENT DOCUMENT

Patent Document 1: Japanese Patent Application Laid-Open No. 2019-40226

### NON-PATENT DOCUMENT

Non-Patent Document 1: J. Napier: "The prehensile movements of the human hand," J. Bone and Joint Surgery, 38B, 4, pp. 902-913 (1956).

### SUMMARY OF THE INVENTION

### PROBLEMS TO BE SOLVED BY THE INVENTION

The object of the present disclosure is to provide an information processing device, an information processing method, a computer program, and an augmented reality system that process information regarding augmented reality.

### SOLUTIONS TO PROBLEMS

A first aspect of the present disclosure is an information processing device including
an acquisition unit configured to acquire a position of a hand of a user and a posture of a finger, and
a control unit configured to control a display operation of a display device configured to display a virtual object with being superimposed on a real space,
in which the control unit determines a hand interaction that the user is trying to perform, and a virtual object targeted by the hand interaction, on the basis of the position of the hand and the posture of the finger that have been acquired by the acquisition unit, and controls a behavior of the virtual object to be implemented in response to the hand interaction, on the basis of an attribute set for the virtual object.

In the present disclosure, a hand interaction is defined, and the attribute including executability of each hand interaction is preset for each virtual object. Then, the control unit controls a behavior of a virtual object to be implemented in response to a hand interaction of the user that is set by the attribute to be executable.

The control unit determines a hand interaction that the user is trying to perform, from among a plurality of types of predefined hand interactions, on the basis of the position of the hand and the posture of the finger that have been acquired by the acquisition unit. For example, the control unit determines which holding operation out of precise holding of pinching with a thumb and a forefinger or grip holding of gripping using three or more fingers is performed, further determines a hand interaction such as "push", "squash", "slap", or "touch" on the basis of an angle of a positional change of the hand with respect to a virtual object and a speed of a positional change of the finger with respect to the virtual object, and controls a behavior of the virtual object to be implemented in response to various hand interactions.

Furthermore, a second aspect of the present disclosure is an information processing method including
an acquisition step of acquiring a position of a hand of a user and a posture of a finger, and
a control step of controlling a display operation of a display device configured to display a virtual object with being superimposed on a real space,
in which, in the control step, a hand interaction that the user is trying to perform, and a virtual object targeted by the hand interaction are determined on the basis of the position of the hand and the posture of the finger that have been acquired in the acquisition step, and a behavior of the virtual object to be implemented in response to the hand interaction is controlled on the basis of an attribute set for the virtual object.

Furthermore, a third aspect of the present disclosure is a computer program described in a computer-readable format in such a manner as to cause a computer to function as
an acquisition unit configured to acquire a position of a hand of a user and a posture of a finger, and
a control unit configured to control a display operation of a display device configured to display a virtual object with being superimposed on a real space,
in which the control unit determines a hand interaction that the user is trying to perform, and a virtual object targeted by the hand interaction, on the basis of the position of the hand and the posture of the finger that have been acquired by the acquisition unit, and controls a behavior of the virtual object to be implemented in response to the hand interaction, on the basis of an attribute set for the virtual object.

The computer program according to the third aspect of the present disclosure defines a computer program described in a computer-readable format in such a manner as to implement predetermined processing on a computer. In other words, by installing the computer program according to the claims of the subject application, onto a computer, a cooperative function is fulfilled on the computer, and a function effect similar to that of the information processing device according to the first aspect of the present disclosure can be obtained.

Furthermore, a fourth aspect of the present disclosure is an augmented reality system including
a display device configured to display a virtual object with being superimposed on a real space, and
a control unit configured to control a display operation of a display device configured to display a virtual object with being superimposed on a real space,
in which the control unit determines a hand interaction that the user is trying to perform, and a virtual object targeted by the hand interaction, on the basis of the position of the hand and the posture of the finger that have been acquired by the acquisition unit, and controls a behavior of the virtual object to be implemented in response to the hand interaction, on the basis of an attribute set for the virtual object.

Here, the "system" refers to a logical aggregate of a plurality of devices (or functional modules implementing specific functions), and the devices or the functional modules need not be always included in a single casing.

### EFFECTS OF THE INVENTION

According to the present disclosure, an information processing device, an information processing method, a computer program, and an augmented reality system that realize a hand interaction with respect to a virtual object using a hand and fingers of a user can be provided.

Note that the effects described in this specification are merely provided as exemplary effects, and the effects caused by the present disclosure are not limited to these. Furthermore, in some cases, the present disclosure further causes additional effects aside from the above-described effects.

Yet another object, features, and advantages of the present disclosure will become apparent by embodiments to be described later and more detailed description that is based on the attached drawings.

### BRIEF DESCRIPTION OF DRAWINGS

Fig. 1 is a diagram illustrating a back of a hand of a user on which a controller 10 is installed using a belt 11.
Fig. 2 is a diagram illustrating a palm of a hand of a user on which the controller 10 is installed using the belt 11.
Fig. 3 is a diagram illustrating a side surface of a hand of a user on which the controller 10 is installed using the belt 11.
Fig. 4 is a diagram illustrating a state in which a user wears an AR glass 41 on his/her head portion, and also wears controllers 42 and 43 respectively on both hands.
Fig. 5 is a diagram illustrating a functional configuration example of an AR system 100.
Fig. 6 is a diagram illustrating a state in which a user wears an AR glass on his head portion.
Fig. 7 is a diagram illustrating a configuration example of an AR system 700 including an AR glass 701 and a controller 702.
Fig. 8 is a diagram illustrating a configuration example of an AR system 800 including an AR glass 801, a controller 802, and an information terminal 803.
Fig. 9 is a diagram illustrating a specific configuration example of a controller 110.
Fig. 10 is a diagram illustrating a specific configuration example of a controller 110.
Fig. 11 is a diagram illustrating a specific configuration example of a controller 110.
Fig. 12 is a diagram illustrating a specific configuration example of a controller 110.
Fig. 13 is a diagram illustrating a specific configuration example of a controller 110.
Fig. 14 is a diagram illustrating a functional configuration example included in a control unit 140.
Fig. 15 is a diagram illustrating a state in which virtual objects are arranged around a user.
Fig. 16 is a diagram for describing a structure by which an AR glass displays a virtual object in such a manner as to follow the movement of a head portion of a user.
Fig. 17 is a diagram illustrating a method of precisely holding an object.
Fig. 18 is a diagram illustrating a method of holding an object in a gripping manner.
Fig. 19 is a diagram illustrating a state of pinching a sword.
Fig. 20 is a diagram illustrating a state of gripping a sword.
Fig. 21 is a diagram illustrating an example in which an attribute regarding the executability of each holding operation is set for each virtual object.
Fig. 22 is a diagram illustrating a behavior in a virtual space that is to be implemented in response to a holding operation of a user in a region in which no virtual object exists.
Fig. 23 is a diagram illustrating a behavior in a virtual space that is to be implemented in response to a holding operation of a user in a region in which no virtual object exists.
Fig. 24 is a flowchart illustrating a processing procedure for implementing a behavior of a virtual object in response to a holding operation performed by a user.
Fig. 25 is a diagram illustrating a configuration example of a remote operation system 2500.
Fig. 26 is a diagram illustrating a state in which an operator approximates his/her hand to a virtual object on a master device 2510 side.
Fig. 27 is a diagram illustrating a state in which a robot 2521 approaches an object in such a manner as to follow the movement of a hand of an operator on a slave device 2520 side.
Fig. 28 is a flowchart illustrating a processing procedure for an operator performing an operation to hold a remote object in the remote operation system 2500.
Fig. 29 is a diagram illustrating an example in which an attribute is set for each virtual object (example including an attribute of executability of sticking processing (processing accompanying a holding operation)).
Fig. 30 is a diagram illustrating an operation example of sticking processing.
Fig. 31 is a diagram illustrating an example in which an attribute is set for each virtual object (example including an attribute of a holdable region for each holding operation).
Fig. 32 is a diagram illustrating a state corresponding to a distance between a hand of a user and a virtual object.
Fig. 33 is a diagram illustrating a finger gesture of trying to pinch a virtual object.
Fig. 34 is a diagram illustrating a finger gesture of trying to grip a virtual object.
Fig. 35 is a diagram illustrating a finger gesture of not trying to hold a virtual object.
Fig. 36 is a diagram illustrating a UI behavior of a virtual object to be implemented in accordance with a position and a posture of a hand of a user.
Fig. 37 is a diagram illustrating a UI behavior of a virtual object to be implemented in accordance with a position and a posture of a hand of a user.
Fig. 38 is a diagram illustrating a UI behavior of a virtual object to be implemented in accordance with a position and a posture of a hand of a user.
Fig. 39 is a diagram illustrating a UI behavior of a virtual object to be implemented in accordance with a position and a posture of a hand of a user.
Fig. 40 is a diagram illustrating a UI behavior of a virtual object to be implemented in accordance with a position and a posture of a hand of a user.
Fig. 41 is a diagram illustrating a UI behavior of a virtual object to be implemented in accordance with a position and a posture of a hand of a user.
Fig. 42 is a diagram illustrating a UI behavior of a virtual object to be implemented in accordance with a position and a posture of a hand of a user.
Fig. 43 is a diagram illustrating a UI behavior of a virtual object to be implemented in accordance with a position and a posture of a hand of a user.
Fig. 44 is a flowchart illustrating a processing procedure for implementing a behavior of a virtual object in response to a holding operation performed by a user (processing procedure including a change of a UI behavior in a holdable region of a virtual object).
Fig. 45 is a diagram illustrating a hand interaction of pushing a virtual object.
Fig. 46 is a diagram illustrating a hand interaction of squashing a virtual object.
Fig. 47 is a diagram illustrating an example in which an attribute regarding the executability of each hand interaction (push, squash) is set for each virtual object.
Fig. 48 is a diagram illustrating a hand interaction of slapping a virtual object.
Fig. 49 is a diagram illustrating a hand interaction of touching a virtual object.
Fig. 50 is a diagram illustrating an example in which an attribute regarding the executability of each hand interaction (slap, touch) is set for each virtual object.
Fig. 51 is a diagram illustrating features of each hand interaction with respect to a virtual object.
Fig. 52 is a flowchart illustrating a processing procedure for implementing a behavior of a virtual object in response to a hand interaction performed by a user.

### MODE FOR CARRYING OUT THE INVENTION

In a real space, an object can be held by a behavior such as pinching or gripping, and the object changes in its shape by force added from a pinching or gripping hand. On the other hand, in a virtual space, because an object does not exist in reality, a hand slips through the object. Thus, an object cannot be held by the same behavior as that in the real space. For example, an augmented reality system that provides a user interface (UI) of pinching an object in a virtual space with fingertips by putting fingers into the object, or pinching a frame provided on an outer periphery of an object can also be considered. However, a behavior of holding an object through a UI in a virtual space has a large difference from a behavior of holding an object in a real space, and the reality is greatly impaired.

Furthermore, because an object in a virtual space does not exist actually, in the case of holding the object by a behavior such as pinching or gripping, a hand slips through the object, and the user cannot obtain realistic tactile feeling. For example, in the case of holding an object in a virtual space by attaching an exoskeletal kinesthetic sense presentation device to a hand, a method of implementing a behavior in a virtual space that is similar to a behavior of holding an object in a real space by locking the movement of the hand in such a manner as to prevent the hand from slipping through the object can also be considered. However, because the purchase cost of the kinesthetic sense presentation device is high and an installation location of the kinesthetic sense presentation device is required, the kinesthetic sense presentation device can be used only by limited users in limited environments. Furthermore, because a large device is attached to a hand and fingers, the user might feel a sense of wearing burdensome, and immersive feeling and reality might be inhibited.

In view of the foregoing, in the present disclosure, for enhancing immersive feeling and reality felt by the user when holding a virtual object, even in a case where fingers slip through a virtual object, by a behavior not differing from a behavior of holding an object in a real space, a behavior in which the user can intuitively hold a virtual object is implemented. Hereinafter, the present disclosure will be described with reference to the drawings in the following order.
A. System Configuration
B. Configuration of Controller
C. Basic Operation of AR Glass
D. Holding of Virtual Object
   D-1. Attribute of Virtual Object
   D-2. Setting Method of Attribute of Virtual Object
   D-3. Change of Behavior That is Made in Accordance with Holding Operation
E. Trigger of Holding Operation
F. Behavior Control of Virtual Object That Is Based on Attribute
G. Application to Remote System
H. Position and Posture Control of Virtual Object Implemented in Response to Grip Holding Operation
I. UI Behavior Implemented in Response to Holding Operation
J. Various Hand Interactions with Respect to Virtual Object
   J-1. Attribute of Hand Interaction That Corresponds to Difference in Angle of Positional Change
   J-2. Setting of Attribute of Hand Interaction That Corresponds to Difference in Angle of Positional Change
   J-3. Trigger of Hand Interaction That Corresponds to Difference in Angle of Positional Change
   J-4. Attribute of Hand Interaction That Corresponds to Difference in Speed of Positional Change
   J-5. UI behavior Corresponding to Difference in Speed of Positional Change
   J-6. Setting of Attribute of Hand Interaction That Corresponds to Difference in Speed of Positional Change
   J-7. Trigger of Hand Interaction That Corresponds to Difference in Speed of Positional Change
   J-8. Behavior Control of Virtual Object That Is Based on Attribute

### A. System Configuration

In the field of VR, AR, and the like, there has been known an input method in which a user exploring a virtual space with wearing a head-mounted display performs an operation while holding a controller with a hand. However, it is preferable that the user can go about his/her daily life in a real space such as walking and holding of objects (including real objects and virtual objects) while looking over the real space through an AR glass. For this reason, an input method in which fingers are freely usable without fingers being restrained by holding a controller or the like is preferable.

Furthermore, as an input method in which fingers of the user are not restrained, there is a method of detecting a movement of a hand of the user from a captured image of a camera. For example, bones of fingers of the user are extracted by an RGB camera or a time of flight (ToF) camera attached to an AR glass outward, and the positions and postures of the fingers or gestures of the fingers are recognized. However, in the method of detecting a hand of the user from an image of a camera, there are a problem of occlusion and a problem of a user hand being undetectable on the outside of a field angle of the camera.

In view of the foregoing, in the present disclosure, an AR system is configured in such a manner that fingers are freely usable, by installing a controller to be used for hand position detection, finger posture recognition, finger gesture recognition, or the like, on the hand and fingers of the user. Furthermore, for holding a real-world object or an imaginary object using the hand and fingers on which the controller is installed, or placing a virtual object on a palm, it is preferable to make the palm free. It is accordingly preferable to install the controller on the back of the hand.

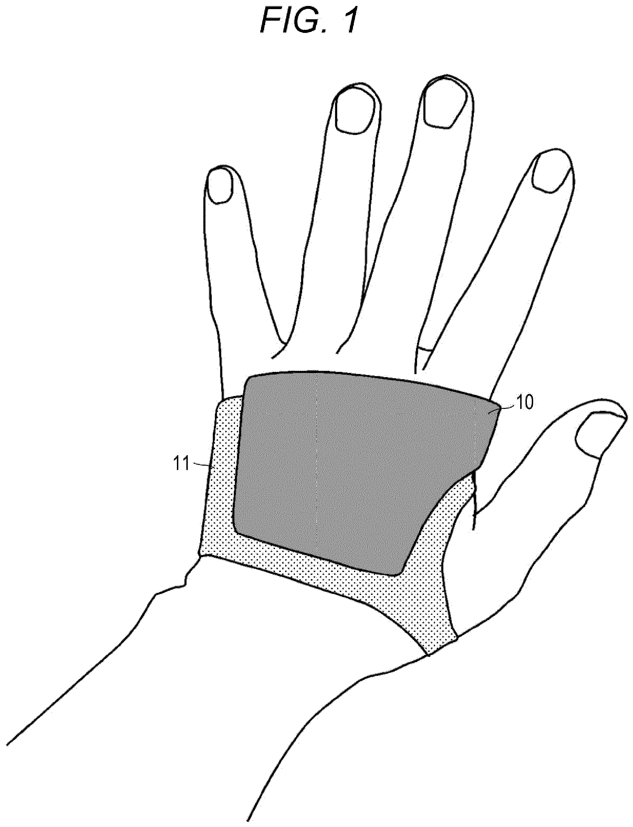

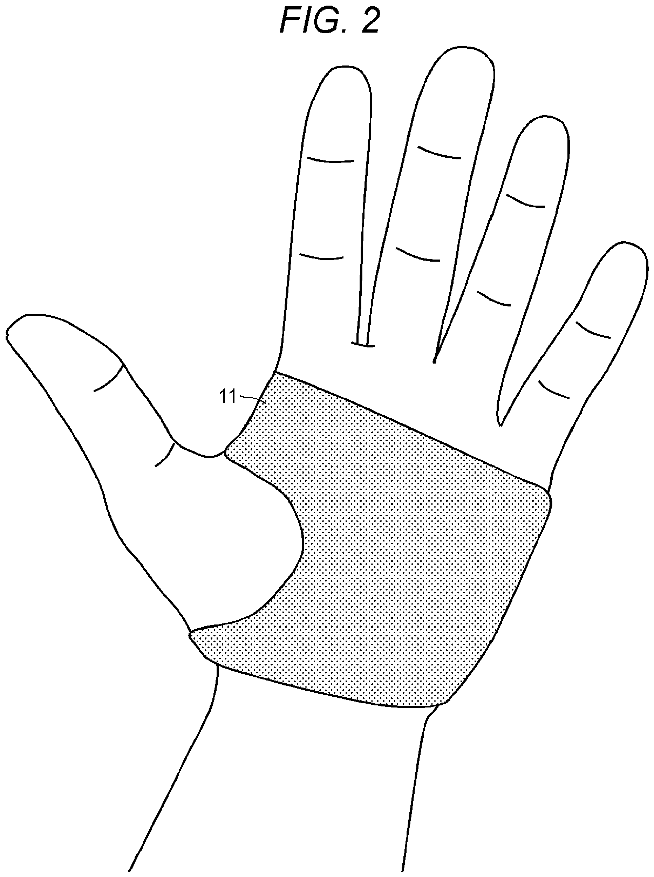

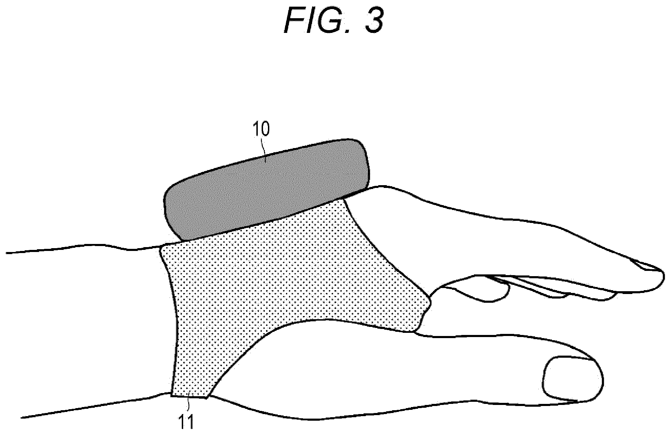

For example, a controller is installed on the back of the hand of the user using a belt. Figs. 1 to 3 respectively illustrate a back of a hand, a palm, and a side surface of a hand of the user, on which a controller 10 is installed using a belt 11. As a matter of course, a fixing method is not always limited to a fixing method that uses a belt. For example, a controller may be attached to the back of a hand using an adhesive pad. Note that, Figs. 1 to 3 illustrate examples in which the controller 10 is attached to the left hand of the user, but the controller 10 having a bilaterally-symmetric shape can also be attached to the right hand.

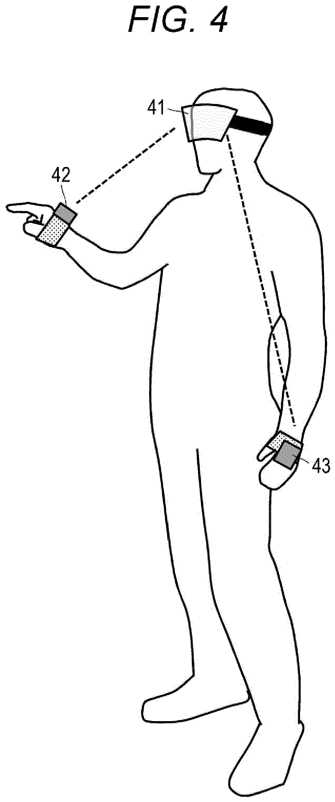

Fig. 4 is a diagram illustrating a state in which a user wears an AR glass 41 on his/her head portion, and also wears controllers 42 and 43 respectively on both hands. As described above, each of the controllers 42 and 43 includes functions of hand position detection, finger posture recognition, and finger gesture recognition. Furthermore, the AR glass 41 includes a function of displaying a virtual object with being superimposed on a real space.

Here, the AR glass 41 can recognize, via the controllers 42 and 43, the respective positions of the left and right hands, postures of fingers, and a gesture of fingers. Furthermore, the AR glass 41 includes a function of detecting the position and the posture of a head portion of the user. Thus, the AR glass 41 can detect relative positions between the head portion of the user and the controllers 42 and 43 (i.e., relative positions between the head portion and the left and right hands of the user). Furthermore, because a coordinate position in the real space of a virtual object to be displayed by the AR glass 41 is identified, relative positions between the virtual object and the left and right hands of the user can be detected.

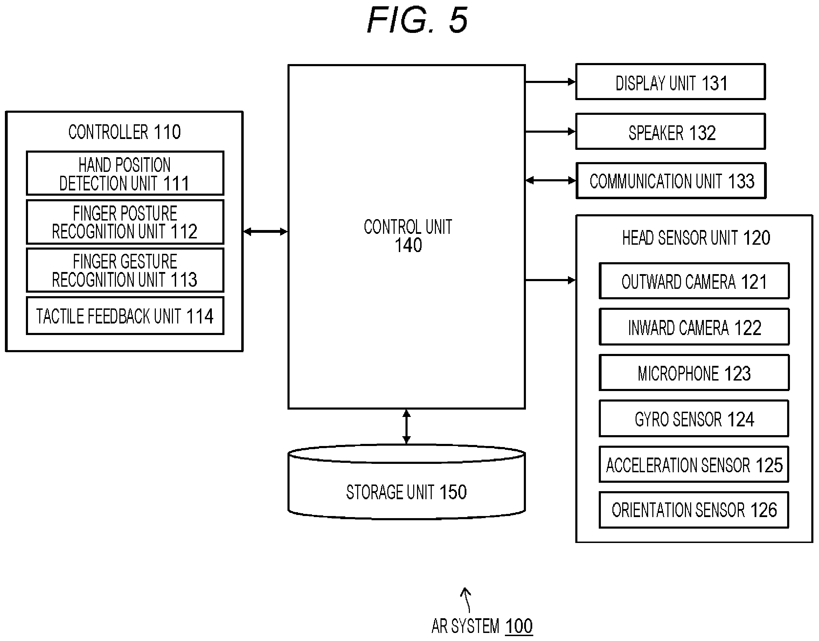

Fig. 5 illustrates a functional configuration example of an AR system 100 including an AR glass and a controller installed on the back of the hand of the user. The AR system 100 illustrated in the drawing includes a controller 110 installed on the back of the hand of the user, a head sensor unit 120, a display unit 131 that displays a virtual object on the AR glass, and a control unit 140 that comprehensively controls the operations of the entire AR system 100. The controller 110 includes a hand position detection unit 111, a finger posture recognition unit 112, a finger gesture recognition unit 113, and a tactile feedback unit 114. The head sensor unit 120 is mounted on an AR glass, and includes an outward camera 121, an inward camera 122, a microphone 123, a gyro sensor 124, an acceleration sensor 125, and an orientation sensor 126. Note that, Fig. 5 illustrates only one controller 110 for the sake of simplification of the drawing, but in a case where controllers 110 are respectively installed on the left and right hands of the user, the AR system 100 includes two controllers 110.

Furthermore, the AR system 100 may further include a speaker 132 for outputting an audio signal of voice regarding a virtual object or the like, and a communication unit 133 for the AR system 100 performing communication with the outside. Furthermore, the control unit 140 may include a large-scale storage unit 150 including a solid state drive (SSD) and the like.

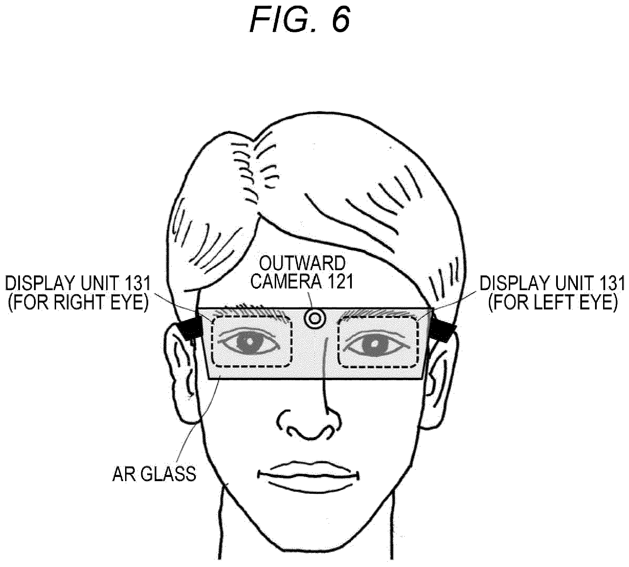

Generally, an AR glass main body is a glasses-type or goggles-type device, and is used by being worn by the user on his/her head portion. The AR glass main body can display digital information with being superimposed on a viewing field of both eyes or one eye of the user, emphasize or attenuate a specific real object, and delete a specific real object to show as if the specific real object did not exist. Fig. 6 illustrates a state in which a user wears an AR glass on his head portion. In the AR glass illustrated in the drawing, a display unit 131 for a left eye and a display unit 131 for a right eye are respectively arranged in front of the left and right eyes of the user. The display unit 131 is transparent or semi-transparent, and displays a virtual object with being superimposed onto a predetermined position in a real space, emphasizes or attenuates a specific real object, and deletes a specific real object to show as if the specific real object did not exist. The left and right display units 131 may be independently driven to perform display, for example, and may display a parallax image (i.e., may perform 3D display of a virtual object). Furthermore, the outward camera 121 directed toward a line-of-sight direction of the user is arranged at almost the center of the AR glass.

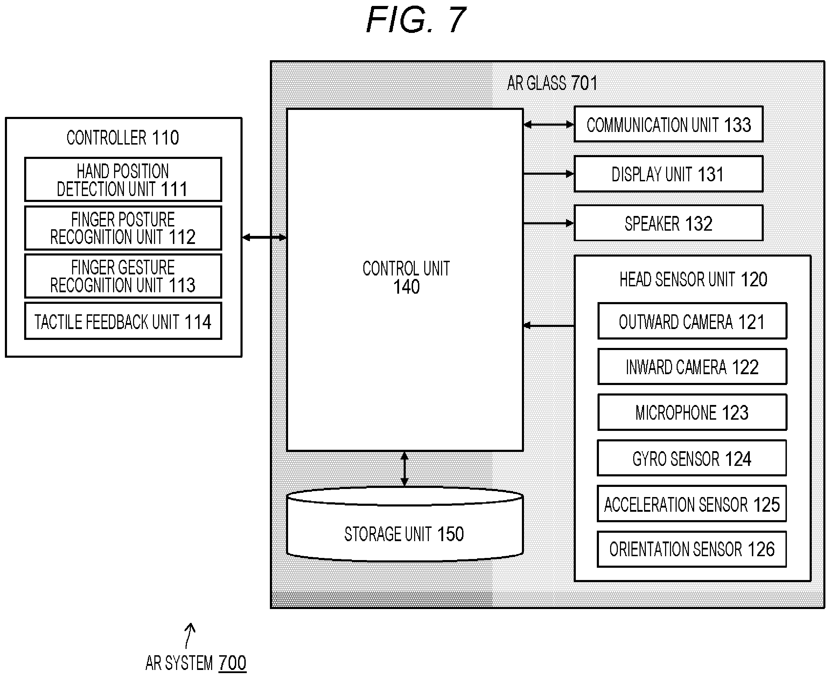

The AR system 100 can include two devices corresponding to an AR glass to be worn by the user on his/her head portion, and a controller to be attached to the back of the hand of the user, for example. Nevertheless, in a case where controllers are installed on the backs of left and right hands of the user, the AR system 100 includes three devices corresponding to an AR glass and two controllers. Fig. 7 illustrates a configuration example of an AR system 700 including an AR glass 701 and a controller 110. The AR glass 701 includes a control unit 140, a storage unit 150, a head sensor unit 120, a display unit 131, a speaker 132, and a communication unit 133. Furthermore, the controller 110 includes a hand position detection unit 111, a finger posture recognition unit 112, a finger gesture recognition unit 113, and a tactile feedback unit 114.

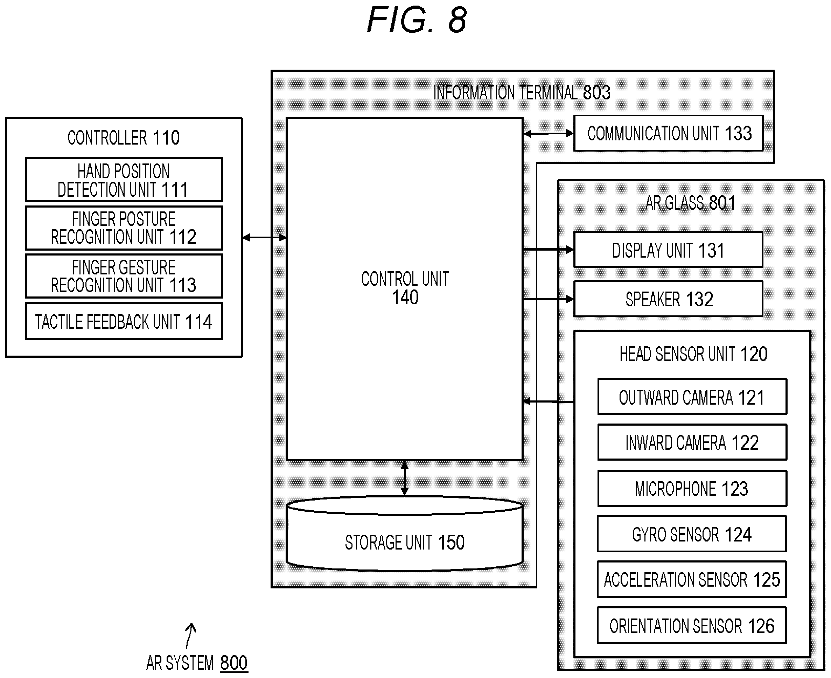

As another configuration example, the AR system 100 includes three devices corresponding to an AR glass to be worn by the user on his/her head portion, a controller to be attached to the back of the hand of the user, and an information terminal such as a smartphone or a tablet. Fig. 8 illustrates a configuration example of an AR system 800 including an AR glass 801, a controller 110, and an information terminal 803. The AR glass 801 includes a display unit 131, a speaker 132, and a head sensor unit 120. The controller 110 includes a hand position detection unit 111, a finger posture recognition unit 112, a finger gesture recognition unit 113, and a tactile feedback unit 114. Furthermore, the information terminal 803 includes a control unit 140, a storage unit 150, and a communication unit 133.

Note that a specific device configuration of the AR system 100 is not limited to the device configurations illustrated in Figs. 7 and 8. Furthermore, the AR system 100 may further include a component other than those illustrated in Fig. 1.

Each component of the AR system 100 will be described with reference to Fig. 5.

The controller 110 includes a hand position detection unit 111, a finger posture recognition unit 112, a finger gesture recognition unit 113, and a tactile feedback unit 114.

The hand position detection unit 111 detects the position of the hand of the user. The finger posture recognition unit 112 recognizes postures of fingers of the user. In the present embodiment, the finger posture recognition unit 112 is not essential. Furthermore, the finger gesture recognition unit 113 recognizes a gesture of fingers. For example, the finger gesture recognition unit 113 recognizes whether fingertips of a thumb and another finger (forefinger, etc.) are in contact or separated.

The tactile feedback unit 114 includes electromagnetic or piezoelectric vibrators arranged in an array, for example, and performs tactile feedback to the back of the hand of the user by vibration presentation. In the present embodiment, the tactile feedback unit 114 is included in the controller 110 installed on the back of the hand of the user, but the tactile feedback unit 114 may be attached to one or more portions on the body of the user that are other than the back of the hand, and be configured to perform vibration presentation.

The head sensor unit 120 is mounted on an AR glass, and includes an outward camera 121, an inward camera 122, a microphone 123, a gyro sensor 124, an acceleration sensor 125, and an orientation sensor 126.

The outward camera 121 includes an RGB camera, for example, and is installed in such a manner as to capture an image of the outside of the AR glass (i.e., front direction of the user wearing the AR glass. The outward camera 121 can capture images of finger operations of the user, but in a case where the fingers of the user hide behind an obstacle, in a case where fingertips hide behind the back of the hand, in a case where the user puts his/her hands behind the body, or the like, images of finger operations of the user cannot be captured. Furthermore, the outward camera 121 may further include any one of an IR camera including an IR light emission unit and an IR light receiving unit, or a ToF camera. In a case where the IR camera is used as the outward camera 121, by attaching a recursive reflector to an object to be captured, such as a back of a hand, the IR camera emits infrared light and receives infrared light reflected from the recursive reflector. Image signals obtained by image capturing performed by the outward camera 121 are transferred to the control unit 140.

The microphone 123 may be a single sound collection element, or a microphone array including a plurality of sound collection elements. The microphone 123 collects voice of a user wearing an AR glass, and ambient sound of the user. Audio signals collected by the microphone 123 are transferred to the control unit 140.

The gyro sensor 124, the acceleration sensor 125, and the orientation sensor 126 may include an inertial measurement unit (IMU). Sensor signals of the gyro sensor 124, the acceleration sensor 125, and the orientation sensor 126 are transferred to the control unit 140. On the basis of these sensor signals, the control unit 140 can detect the position and the posture of a head portion of the user wearing the AR glass.

The display unit 131 includes a transmissive display (lens for eyewear, etc.) installed in front of both eyes or one eye of the user wearing the AR glass, and is used for the display of a virtual space. Specifically, the display unit 131 augments a real space viewed from the user, by displaying information (virtual object), or emphasizing, attenuating, or deleting a real object. The display unit 131 performs a display operation on the basis of a control signal from the control unit 140. Furthermore, a structure by which the display unit 131 see-through displays a virtual object is not specifically limited.

The speaker 132 includes a single sound production element or an array of a plurality of sound production elements, and is installed on an AR glass, for example. Voice regarding a virtual object to be displayed on the display unit 131, for example, is output from the speaker 132, but another audio signal may be output.

The communication unit 133 includes a wireless communication function complying with the Wi-Fi (registered trademark), the Bluetooth (registered trademark), or the like, for example. The communication unit 133 mainly performs a communication operation for implementing data exchange between the control unit 140 and an external system (not illustrated).

The control unit 140 is installed in an AR glass, or arranged in a device (smartphone, etc.) separated from the AR glass, together with the storage unit 150 and a drive power source such as a battery. The control unit 140 executes various types of processing by executing various programs read out from the storage unit 150.

### B. Configuration of Controller

The controller 110 is an input device for the AR system 100 according to the present embodiment, and corresponds to a keyboard, a mouse, a touch panel, or the like in an operating system (OS) of the Windows or the Linux (registered trademark). As also illustrated in Figs. 1 to 3, the controller 110 is used with being installed on the back of the hand of the user. Thus, fingers of the user are not restrained by the controller 110, and the user can freely use the fingers. For example, the user can hold a real-world object or an imaginary object using the hand on which the controller 110 is installed, and place a virtual object on a palm.

The controller 110 is a device that performs input to the AR system 100 on the basis of the position of the hand of the user, postures of fingers, and postures of fingers. Thus, as illustrated in Figs. 5, 7 and 8, the controller 110 includes the hand position detection unit 111, the finger posture recognition unit 112, and the finger gesture recognition unit 113. The hand position detection unit 111 detects the position of the hand of the user. The finger posture recognition unit 112 recognizes postures of fingers of the user. The finger gesture recognition unit 113 recognizes a gesture of fingers. For example, the finger gesture recognition unit 113 recognizes whether fingertips of a thumb and another finger (forefinger, etc.) are in contact or separated. Furthermore, the controller 110 includes the tactile feedback unit 114 that gives a tactile sense to the back of the hand of the user by vibration presentation. Hereinafter, specific configuration examples of the hand position detection unit 111, the finger posture recognition unit 112, and the finger gesture recognition unit 113 will be described.

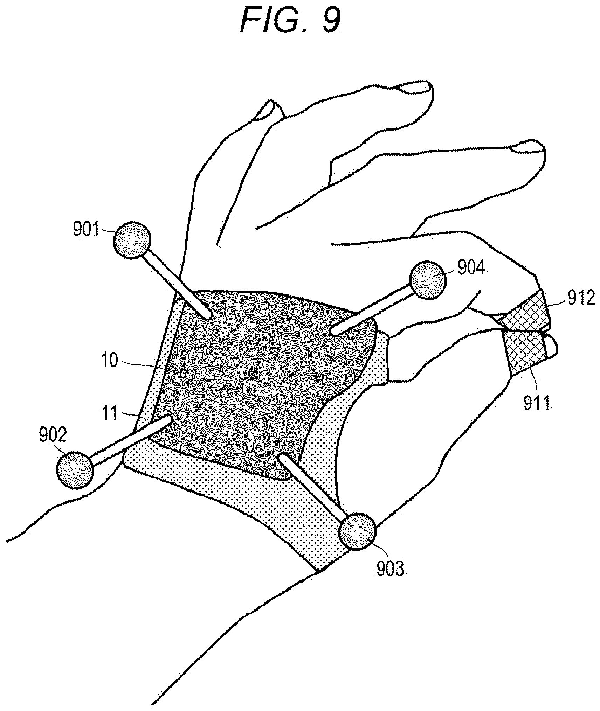

Fig. 9 illustrates configuration examples of the hand position detection unit 111 and the finger gesture recognition unit 113. Nevertheless, in the example illustrated in Fig. 9, the controller 110 includes an arbitrary finger posture recognition unit 112 or does not include the finger posture recognition unit 112. In this example, the finger posture recognition unit 112 will not be described.

In the example illustrated in Fig. 9, the hand position detection unit 111 uses an IR detection method. More specifically, the hand position detection unit 111 includes a combination of a plurality of (four in the example illustrated in Fig. 9) IR reflecting markers 901 to 904 attached to a casing 10 of the controller 110, and an IR camera (not illustrated) provided on an AR glass (or the head sensor unit 120). The IR camera includes an IR transmission unit and an IR receiving unit. An IR signal output from the IR transmission unit is reflected by each of the IR reflecting markers 901 to 904, and the reflected IR signal is received by the IR receiving unit. Luminescent spots of the IR reflecting markers 901 to 904 can be thereby detected. Then, on the basis of position information of these luminescent spots, the position and the posture of the main body 10 of the controller 110 (or the back of the hand of the user) can be detected. It is preferable that the IR camera is of a stereo type including a plurality of IR receiving units.

Furthermore, the finger gesture recognition unit 113 recognizes a gesture of fingers. For example, the finger gesture recognition unit 113 recognizes whether fingertips of a thumb and another finger (forefinger, etc.) are in contact or separated. In the example illustrated in Fig. 9, the finger gesture recognition unit 113 uses an electrode detection method. Electrodes 911 and 912 are respectively attached to fingertips of a thumb and a forefinger of the user. Then, if the thumb and the forefinger get into touch with each other, because a conducting state is caused between the electrode 911 and the electrode 912, on the basis of the conducting state between the electrode 911 and the electrode 912, a gesture of the thumb and the forefinger can be recognized.

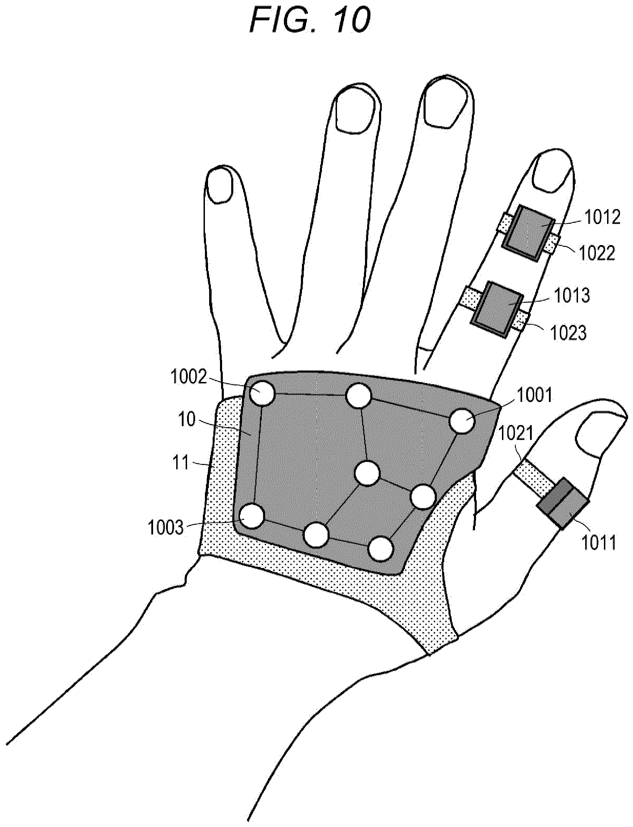

Furthermore, Fig. 10 illustrates another configuration example of the hand position detection unit 111, the finger posture recognition unit 112, and the finger gesture recognition unit 113.

In the example illustrated in Fig. 10, the hand position detection unit 111 detects the position of the hand of the user by the combination of the IR detection method and an IMU detection method. In the IR detection method, IR reflection signals of a plurality of IR reflecting markers 1001, 1002, 1003, and so on that are attached to the casing 10 of the controller 110 are captured by an IR camera (not illustrated) provided on an AR glass (or the head sensor unit 120), and the position and the posture of the hand of the user are detected on the basis of a luminescent spot position of each IR reflecting marker. Furthermore, in the IMU detection method, on the basis of a detection signal of an IMU built in the main body 10 of the controller 110, the position and the posture of the hand of the user are detected. The IMU includes a gyro sensor, an acceleration sensor, and an orientation sensor. When the controller 110 exists within a field of view of the IR camera, the IR detection method is used, and when the controller 110 falls outside the field of view of the IR camera (including a case where occlusion has occurred), the IMU method is used.

Furthermore, in the example illustrated in Fig. 10, the finger posture recognition unit 112 incudes IMUs attached to several points of fingers of the user. Specifically, IMUs 1011, 1012, and 1013 are attached to three points corresponding to a thumb, and a proximal phalanx and a middle phalanx of a forefinger using bands 1021, 1022, and 1023, respectively. On the control unit 140 side, on the basis of a detection signal of each of the IMUs 1011, 1012, and 1013, the posture of the thumb and the postures of the proximal phalanx and the middle phalanx of the forefinger (or an angle of a second joint of the forefinger) can be measured. Nevertheless, other IMUs may be further attached to different locations on the thumb and the forefinger, or an IMU may be attached to a finger other than the thumb and the forefinger. Furthermore, a fixing method of an IMU to each finger is not limited to a band fixing method, and for example, an IMU may be attached to each finger using an adhesive pad.

Furthermore, the finger gesture recognition unit 113 recognizes a gesture of fingers aside from a joint angle of the finger to be recognized by the finger posture recognition unit 112. For example, the finger gesture recognition unit 113 recognizes whether fingertips of the thumb and another finger (forefinger, etc.) are in contact or separated. In the example illustrated in Fig. 10, the finger gesture recognition unit 113 uses a capacitive detection method. Electrodes for capacitive detection are installed at fingertips and middle phalanx portions of the fingers and on the palm, which are not illustrated in Fig. 10. For example, if the fingertips of the thumb and the forefinger spread, capacitance becomes larger, and if the fingertips of the thumb and the forefinger get closer, capacitance becomes smaller. Thus, the finger posture recognition unit 112 can recognize a gesture of the thumb and the forefinger on the basis of a change in capacitance between the fingertips of the thumb and the forefinger.

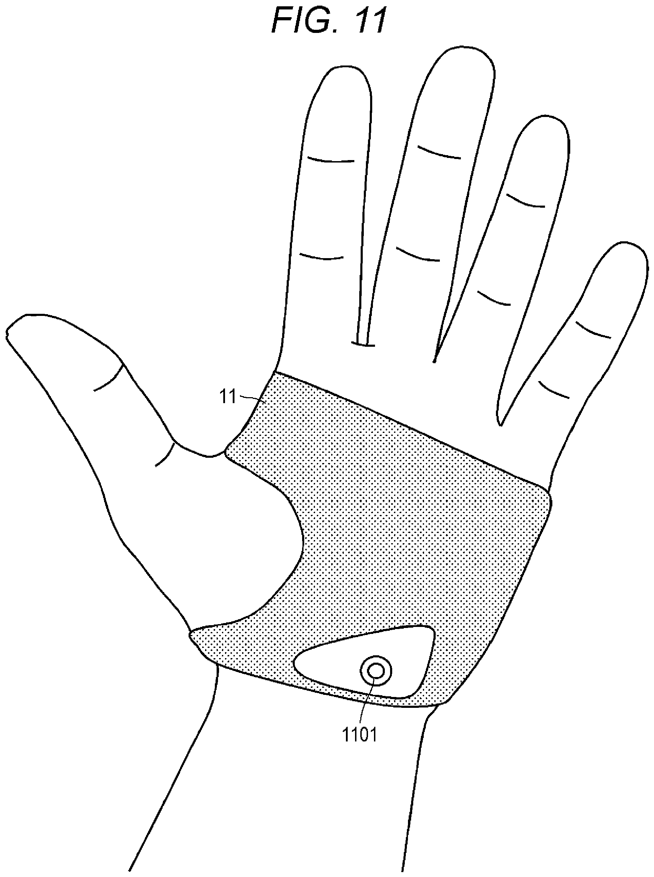

Furthermore, Fig. 11 illustrates yet another configuration example of the hand position detection unit 111, the finger posture recognition unit 112, and the finger gesture recognition unit 113. Nevertheless, because the hand position detection unit 111 and the finger gesture recognition unit 113 have configurations similar to those illustrated in Fig. 10, here, the illustration and detailed description will be omitted, and the finger posture recognition unit 112 will be described.

In the example illustrated in Fig. 11, the finger posture recognition unit 112 includes a ToF camera 1101 installed on the palm using the belt 11. By installing the ToF camera 1101 at wide angle near the wrist, for example, five fingers can be captured. On the control unit 140 side, by performing bone recognition of each finger on the basis of a depth image from the ToF camera 1101, the postures of fingers can be acquired. By the bone recognition, a finger gesture such as contact between the fingertips of the thumb and the forefinger may be recognized.

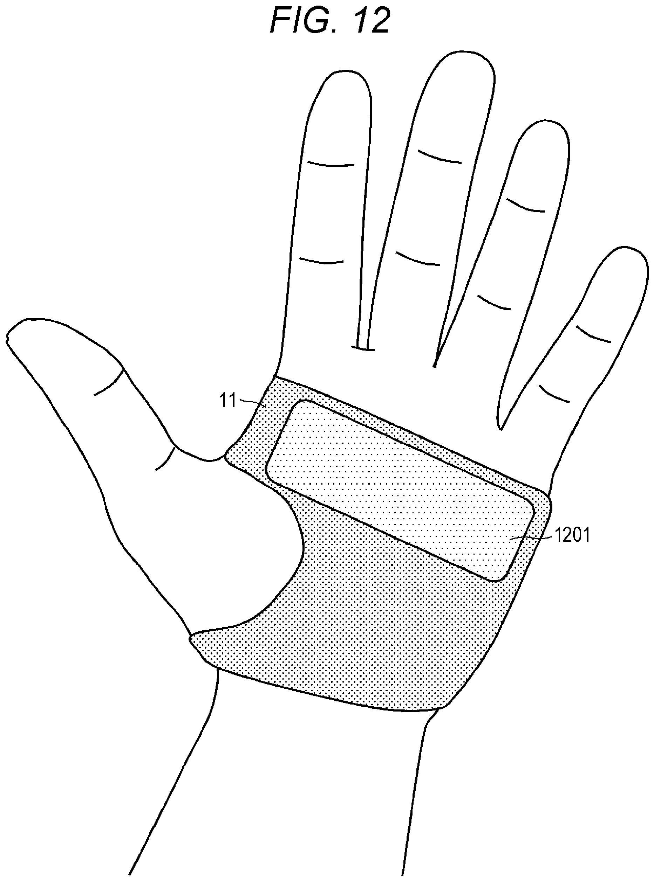

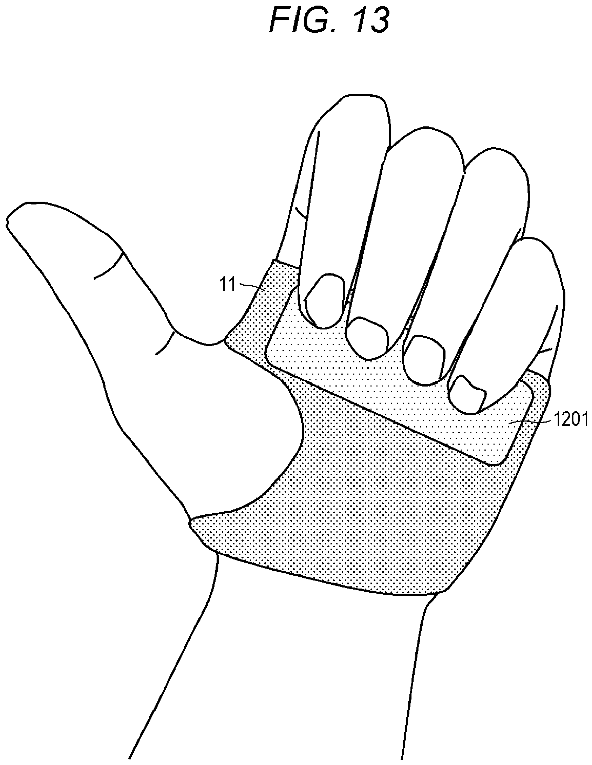

For enhancing detection accuracy, it is preferable to recognize a finger gesture using the capacitive detection method as described above. For example, by arranging a capacitive contact sensor 1201 near the center of the palm using the belt 11 as illustrated in Fig. 12, approximation or contact of fingertips to the palm that is performed by folding fingers including a forefinger, a middle finger, an annular finger, and a little finger as illustrated in Fig. 13, and a gesture of holding (gripping) using these four fingers can be recognized.

Note that the configurations of the hand position detection unit 111, the finger posture recognition unit 112, and the finger gesture recognition unit 113 included in the controller 110 are not always limited to the above-described configurations. As long as the position of the back of the hand can be detected more accurately than the positions of fingers of the hand, configurations other than the above-described configurations can be applied to the controller 110. For example, in a case where the controller 110 can perform self-location estimation alone by simultaneous localization and mapping (SLAM), or in the case of a configuration of detecting the position of the hand highly accurately and robustly in finger recognition that uses a camera (RGB stereo camera, ToF camera, etc.) of the head sensor unit 120, the controller 110 may have a configuration other than the above-described configuration.

### C. Basic Operation of AR Glass

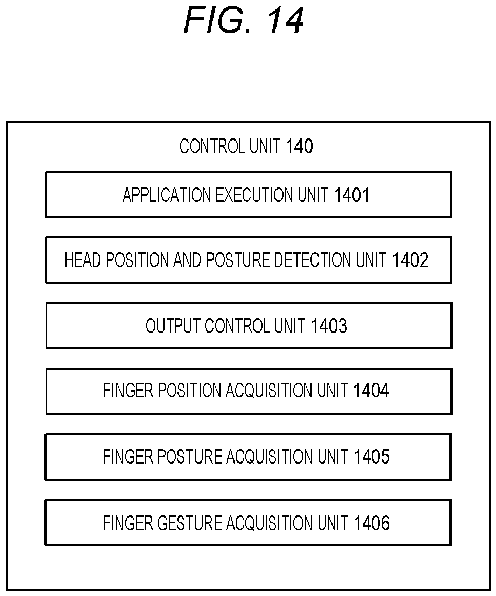

Fig. 14 schematically illustrates a functional configuration example included in the control unit 140. In the example illustrated in the drawing, the control unit 140 includes an application execution unit 1401, a head position and posture detection unit 1402, an output control unit 1403, a hand position acquisition unit 1404, a finger posture acquisition unit 1405, and a finger gesture acquisition unit 1406. These functional modules are implemented by the control unit 140 executing various programs read out from the storage unit 150. Nevertheless, Fig. 14 illustrates only minimum requisite functional modules for implementing the present disclosure, and the control unit 140 may further include another functional module.

The application execution unit 1401 executes an application program including an AR application, under an execution environment provided by an OS. The application execution unit 1401 may concurrently execute a plurality of application programs at the same time. The AR application is an application for movie reproduction, a viewer of 3D objects, or the like, for example, and displays a virtual object with being superimposed onto a field of view of the user wearing an AR glass (refer to Fig. 6) on his/her head portion, emphasizes or attenuates a specific real object, and deletes a specific real object to show as if the specific real object did not exist. The application execution unit 1401 also controls a display operation of an AR application (virtual object) using the display unit 131.

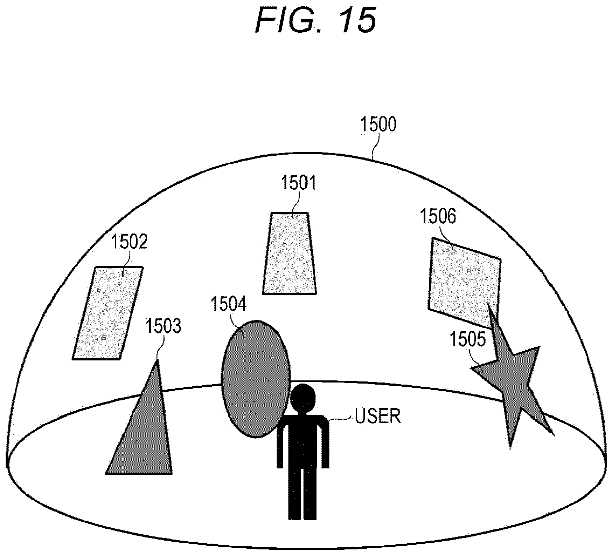

Furthermore, the application execution unit 1401 also controls a behavior of a virtual object to be implemented in response to a hand interaction of the user with respect to the virtual object, on the basis of operations of fingers acquired via the controller 110. In the present embodiment, a hand interaction such as a holding operation on a virtual object is defined, and an attribute regarding the executability of each hand interaction is preset for each virtual object. Then, when a hand interaction of the user is performed with respect to a certain virtual object, the application execution unit 1401 controls a behavior of the virtual object on the basis of a preset attribute, which will be described in detail later. Note that an attribute of a virtual object may be internal data of an AR application, or may be stored into the storage unit 150 as a data file independent of an AR application. An attribute regarding the executability of each hand interaction that is to be set for each virtual object may be set on the basis of an actual behavior to be performed on a real object corresponding to a virtual object, or may be set by a producer of content such as an AR application. Alternatively, an attribute regarding the executability of each hand interaction may be set for each virtual object using a machine learning model pre-learned by deep learning.
virtual objects generated by the AR application are arranged over the complete periphery of the user. Fig. 15 schematically illustrates a state in which a plurality of virtual objects 1501, 1502, 1503, and so on is arranged over a periphery 1500 of a user wearing an AR glass on his/her head portion. The application execution unit 1401 arranges each of the virtual objects 1501, 1502, 1503, and so on over the periphery of the user with reference to the position of a head portion of the user that is estimated on the basis of sensor information from the head sensor unit 120, or a centroid position of the body.

The head position and posture detection unit 1402 detects the position and the posture of the head portion of the user on the basis of sensor signals of the gyro sensor 124, the acceleration sensor 125, and the orientation sensor 126 that are included in the head sensor unit 120 mounted on the AR glass, and further recognizes a line-of-sight direction or a viewing field range of the user.

On the basis of an execution result of an application program of an AR application or the like that is obtained by the application execution unit 1401, the output control unit 1403 controls output of the display unit 131, the speaker 132, and the tactile feedback unit 114. For example, the output control unit 1403 identifies a viewing field range of the user on the basis of a detection result obtained by the head position and posture detection unit 1402, and controls a display operation of a virtual object that is performed by the display unit 131, in such a manner that a virtual object arranged in the viewing field range can be observed by the user through the AR glass (i.e., in such a manner that the virtual object follows the movement of the head portion of the user).

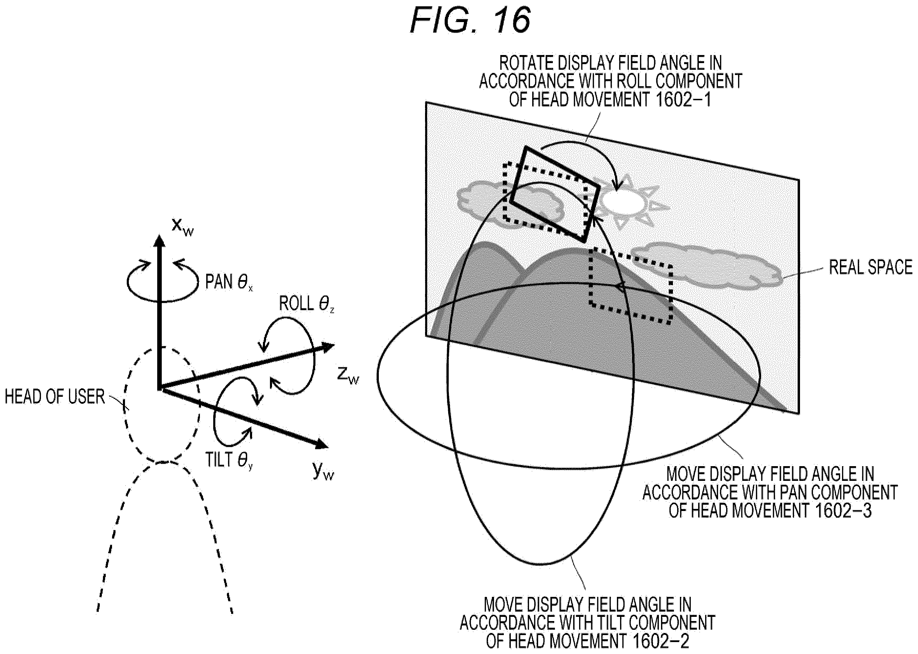

A structure by which an AR glass displays a virtual object in such a manner as to follow the movement of a head portion of the user will be described with reference to Fig. 16. In Fig. 16, a depth direction of a line-of-sight of the user is a z_{w}-axis, a horizontal direction is a y_{w}-axis, and a vertical direction is an x_{w}-axis, and an origin position of the reference axes x_{w}, y_{w}, and z_{w} of the user is set to an eyepoint position of the user. Roll θ_{z} corresponds to a movement around the z_{w}-axis of the head portion of the user, tilt θ_{y} corresponds to a movement around the y_{w}-axis of the head portion of the user, and pan θ_{z} corresponds to a movement around the x_{w}-axis of the head portion of the user. On the basis of sensor signals of the gyro sensor 124, the acceleration sensor 125, and the orientation sensor 126, the head position and posture detection unit 1402 detects a movement (θ₂,θ_{y},θ_{z}) in each direction of roll, tilt, and pan of the head portion of the user, and posture information including a parallel displacement of the head portion. Then, the output control unit 1403 moves a display field angle of the display unit 131 on a real space (for example, refer to Fig. 15) in which virtual objects are arranged, in such a manner as to follow the posture of the head portion of the user, and displays images of virtual objects existing in the display field angle, on the display unit 131. Specifically, the output control unit 1403 moves the display field angle in such a manner as to cancel out the movement of the head portion of the user, by rotating a region 1602-1 in accordance with a roll component of a head movement of the user, moving a region 1602-2 in accordance with a tilt component of a head movement of the user, or moving a region 1602-3 in accordance with a pan component of a head movement of the user. Thus, because virtual objects arranged in the display field angle moved in accordance with the position and the posture of the head portion of the user are displayed on the display unit 131, the user can observe a real space on which the virtual objects are superimposed, through the AR glass.

The hand position acquisition unit 1404, the finger posture acquisition unit 1405, and the finger gesture acquisition unit 1406 acquire information regarding the position of the hand of the user, postures of fingers, and a gesture to be performed by fingers, in cooperation with the hand position detection unit 111, the finger posture recognition unit 112, and the finger gesture recognition unit 112, respectively, on the controller 110 side. Note that, in a case where the hand of the user falls within the viewing field of the outward camera 121, on the basis of an image recognition result of captured images of the outward camera 121, information regarding the position of the hand of the user, postures of fingers, and a gesture to be performed by fingers can be acquired.

Here, a gesture of fingers that is to be acquired by the finger gesture acquisition unit 1406 also includes a hand interaction that the user is trying to perform with respect to a virtual object using fingers. Examples of the hand interactions include "pinch (precise holding)", "grip (grip holding)", "push", "squash", "slap", "touch", and the like. The finger gesture acquisition unit 1406 can determine "pinch (precise holding)" and "grip (grip holding)" mainly on the basis of information regarding the position of the hand of the user and the postures of fingers. In contrast to this, because "push" and "squash" are performed in almost the same postures of fingers, the finger gesture acquisition unit 1406 determines "push" and "squash" on the basis of an angle of a positional change of the hand (or direction of getting closer to a virtual object). Furthermore, because "slap" and "touch" are performed in almost the same postures of fingers, the finger gesture acquisition unit 1406 determines "slap" and "touch" on the basis of a speed of a positional change of the hand (or a relative speed of the hand with respect to a virtual object).

### D. Holding of Virtual Object

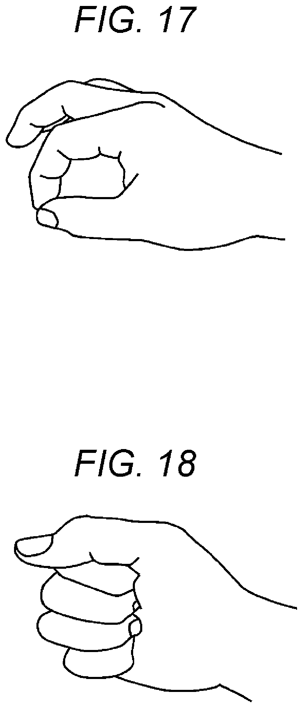

Holding operations of objects in the real space are broadly divided into two types corresponding to precise holding (refer to Fig. 17) for holding an object in such a manner as to pinch the object with the thumb and the forefinger, and grip holding (refer to Fig. 18) for holding an object in such a manner as to grip the object using all fingers (or using entire fingers or three or more fingers), for example (refer to Non-Patent Document 1). As a matter of course, there is a method of precisely holding an object that is other than the method illustrated in Fig. 17, and there is a method of holding an object in a gripping manner that is other than the method illustrated in Fig. 18. Moreover, there are variations of holding operations such as intermediate holding that uses the side surfaces of fingers, and holding that does not use a thumb. Furthermore, for stably holding an object only by one hand, it is necessary to sandwich an object by two or more opposing surfaces of the hand. In some cases, a plurality of fingers is used for one surface.

There are a large variety of holding operations of objects in the real space, such as precise holding, grip holding, and intermediate holding. It is difficult to implement all holding operations in the real space also on a virtual object. If holding operations executable on a virtual object are limited, and behaviors of virtual objects to be implemented in response to holding operations are unified, processing becomes simple and implementability increases. However, if a behavior of a virtual object remains the same even though the user has separately performed holding operations on the same virtual object between precise holding and grip holding, a difference from a behavior in the real space becomes large, and immersive feeling and reality are inhibited.

In view of the foregoing, in the present disclosure, two types or more of holding operations on a virtual object that include precise holding and grip holding are defined. Furthermore, an attribute regarding the executability of each holding operation is preset for each virtual object. Then, if a holding operation is performed by the user on a certain virtual object, the application execution unit 1401 controls a behavior of the virtual object in accordance with a preset attribute.

An attribute regarding the executability of each holding operation that is to be set for each virtual object may be set on the basis of an actual behavior to be performed on a real object corresponding to a virtual object, or may be set by a producer of content such as an AR application. Alternatively, an attribute regarding the executability of each holding operation may be set for each virtual object using a machine learning model pre-learned by deep learning. For example, on the basis of the intention of a producer of AR content, an attribute indicating "whether or not a virtual object can be pinched, or whether or not a virtual object can be gripped" is preset for a holding operation of a virtual object. Specifically, a producer of content such as an AR application sets an attribute of permitting a holding operation close to a behavior on a real object corresponding to a virtual object. Then, if the user performs a holding operation on a virtual object, a behavior of the virtual object that is based on the intention of the producer, such as "a small object can be pinched but cannot be gripped", or "a gun can be gripped but cannot be pinched (for not operating a trigger)" can be implemented. Furthermore, even if the user does not have accurate knowledge about AR content and an attribute of a virtual object, an appropriate holding operation as intended by a producer can be performed on the virtual object.

In the AR system 100 according to the present embodiment, the controller 110 including the hand position detection unit 111, the finger posture recognition unit 112, and the finger gesture recognition unit 113 is installed on the back of the hand of the user. Thus, on the basis of position information of the hand that has been detected by the hand position detection unit 111, and recognition results obtained by the finger posture recognition unit 112 and the finger gesture recognition unit 113, the application execution unit 1401 can identify a virtual object that the user is trying to operate, and a position at which the user is trying to hold the virtual object, and determine the type (either precise holding or grip holding) of a holding operation to be performed on the virtual object. Then, on the basis of an attribute preset for the virtual object (whether or not the virtual object can be pinched, or whether or not the virtual object can be gripped), the application execution unit 1401 controls a behavior of the virtual object. Furthermore, the output control unit 1403 displays and outputs images of a virtual object on which a holding operation is to be performed, on the display unit 131 (or AR glass).

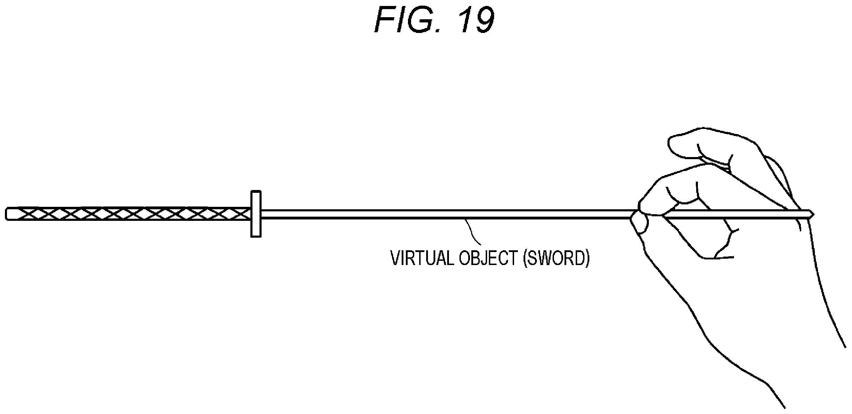

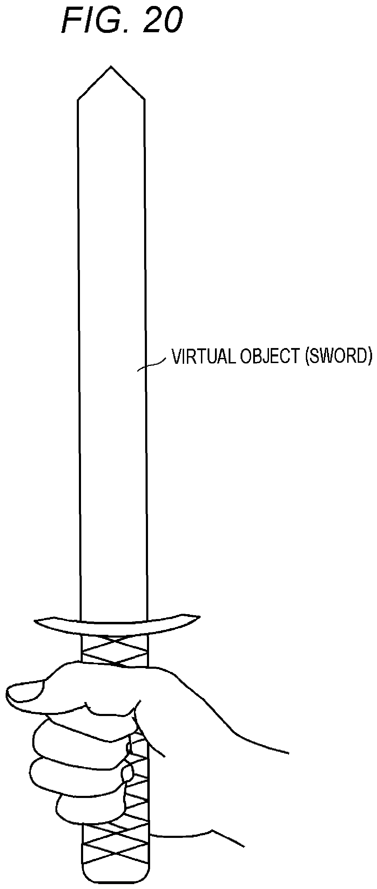

For example, an attribute indicating "executable" is preset for both of "pinch" and "grip" to be performed on a virtual object being a "sword". In a case where a sword is to be pinched, the sword can be pinched at an arbitrary contact position between a hand and a sword body (refer to Fig. 19). On the other hand, in a case where a sword is to be gripped, the sword can be gripped in such a manner as to fit with a portion of a handle such as a shaft (refer to Fig. 20).

Thus, if the application execution unit 1401 recognizes a finger gesture in which the user pinches a sword, via the controller 110, the application execution unit 1401 controls a behavior of pinching the sword at an arbitrary contact position between a hand and a sword body. Then, the application execution unit 1401 generates a movement of the sword in a region starting from a position at which the sword is pinched by the fingers of the user, on the basis of the position of the hand and postures of the fingers, and displays the sword on the display unit 131 (AR glass).

Furthermore, if the application execution unit 1401 recognizes a finger gesture in which the user grips a sword with the thumb and the forefinger, via the controller 110, the application execution unit 1401 controls a behavior of gripping a shaft portion of the sword. Then, the application execution unit 1401 generates a movement of the sword in a region starting from a position at which the shaft portion of the sword is gripped by all fingers of the user, on the basis of the position of the hand and postures of the fingers, and displays the sword on the display unit 131 (AR glass).

By such behavior control of a virtual object, it becomes possible to implement a behavior of the virtual object in response to a hand interaction of the user, by a method close to an actual behavior, or a method close to the intention of a producer of content. Furthermore, in content production of an AR game or the like, in a scene in which a direct operation of a virtual object is performed, different behaviors suitable for the types of holding operations of the user can be implemented on the same virtual object.

### D-1. Attribute of Virtual Object

In the real space, there are a lot of holding operations such as precise holding, grip holding, and intermediate holding. Also in the AR system 100 according to the present disclosure, responding to a wide variety of holding operations, the user can be enabled to implement a behavior of a virtual object in response to a hand interaction of the user, by a method close to an actual behavior, or a method close to the intention of a producer of content.

In the AR system 100 according to the present disclosure, whether or not each holding operation is executable is preset as an attribute of a virtual object. Nevertheless, hereinafter, for the sake of simplification of the description, holding operations are limited to two types corresponding to the precise holding (pinch) and the grip holding (grip), and an attribute of a virtual object is set as follows.
(1) Whether or not a virtual object can be pinched
(2) Whether or not a virtual object can be gripped

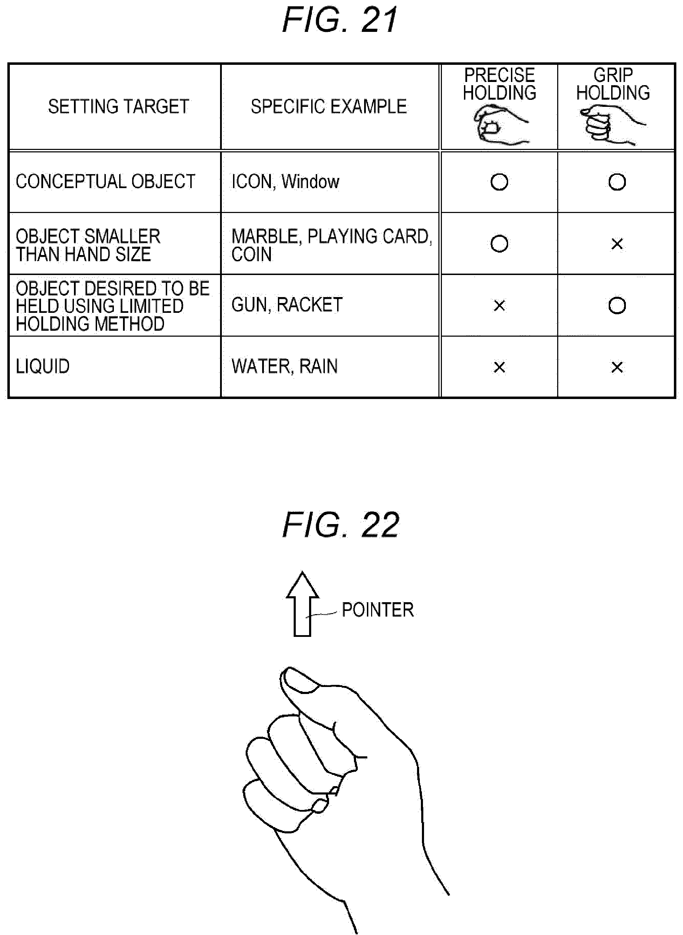

Fig. 21 illustrates an example in which the above-described attribute is preset for each virtual object. In the diagram, "o" represents an attribute indicating that a corresponding holding operation is "executable (or permitted)", and "×" represents an attribute indicating that a corresponding holding operation is "inexecutable (or prohibited)". According to an attribute setting illustrated in the drawing, a conceptual virtual object such as an "icon" or a "Window" can be pinched and gripped. Furthermore, an object such as a "playing card" that is smaller than the size of the hand can be pinched but cannot be gripped. Furthermore, an object such as a "gun" or a "racket" that is desired to be held using a limited holding method (for example, an object desired by a producer of content to be gripped by the user) cannot be pinched but can be gripped. A virtual object being a "gun" is an object for which a holding operation is limited (trigger is pulled with a finger after a pistol grip being held), and cannot be pinched but can be gripped. Furthermore, liquid virtual object such as "water" can be neither pinched nor gripped. Thus, according to the attribute setting illustrated in Fig. 21, the user can designate holding operations of these virtual objects by a method close to an actual behavior.

Note that, as for a holding operation for which an attribute indicating "o" (i.e., "executable") is set, a behavior of a virtual object to be implemented when the holding operation is executed can also be set together. For the sake of simplification of the drawings, Fig. 21 only illustrates "o" or "×" as an attribute of each holding operation to be performed on each virtual object, and the description about a behavior is omitted.

Furthermore, although precise holding and grip holding are both executable, a behavior of a virtual object sometimes varies for each holding operation (behavior to be implemented when precise holding is performed, and behavior to be implemented when grip holding is performed), which is not illustrated in Fig. 21. This is because an intended action sometimes varies also for a real object between the time when the real object is pinched, and the time when the real object is gripped. For example, in a case where a virtual object to be held is a tissue paper case, when the virtual object is pinched, a behavior of pinching one piece of tissue paper is performed, but when the virtual object is gripped, a behavior of gripping the tissue paper case itself (or gripping and lifting) is performed. Thus, as an attribute of a virtual object, in addition to whether or not each holding operation is executable, the AR system 100 may set a behavior for each executable holding operation. With this configuration, when the user holds a virtual object by a certain holding operation, a behavior of the virtual object can be switched to a behavior that is close to an actual behavior and as intended by the user.

In the AR system 100 according to the present disclosure, an attribute regarding the executability of each holding operation is assumed to be preset for each virtual object. Nevertheless, as for a specific virtual object, an attribute value may be set in such a manner as to change between a state before holding and a state after holding. For example, as for a virtual object being a "pistol", by further setting an attribute indicating that, before a pistol grip is gripped, a trigger cannot be pinched, but after the pistol grip is gripped, the trigger can be pinched, and a behavior of "shooting a gun" is "executable" in response to a holding operation of "pinching the trigger", a behavior of the virtual object can be switched to a behavior that is close to an actual behavior and as intended by the user. Furthermore, an attribute of a virtual object that changes in attribute value as time goes on may be set.

### D-2. Setting Method of Attribute of Virtual Object

Basically, a designer of the AR system 100 or a producer of AR content to be used in the AR system 100 is assumed to manually decide an attribute to be set for each virtual object.

Nevertheless, as for a virtual object for which data such as physical characteristics including the shape and the size, and the use application of a corresponding real-world object can be acquired, an attribute of the virtual object may be automatically set on the basis of such data. This is because, if the number of types of virtual objects to be handled in the AR system 100 becomes larger, it is bothersome for a designer of the system or a producer of content to manually set attributes of all virtual objects, and the costs of system design and content production are also large. In other words, by automatically setting an attribute of a virtual object on the basis of data such as physical characteristics and the use application, costs of system design and content production can be reduced.

The method of automatically setting an attribute of a virtual object may be a method of generating an attribute in accordance with an algorithm of analyzing data regarding a corresponding real-world object. For example, an algorithm for performing processing of automatically setting an attribute indicating that a virtual object can be pinched but cannot be gripped, or the like, if a width of the virtual object is equal to or smaller than 3 cm may be used.

Furthermore, a method of automatically setting an attribute of a virtual object may be a method of using an algorithm that can change a rule of setting an attribute of a virtual object, on the basis of information regarding the user. For example, a rule of setting an attribute of a virtual object may be changed depending on the age of the user (young child, adult, elderly), the size of the hand, the race, damage to the body, and a holding operation routinely performed by the user. This is because an optimum holding operation on the same object varies among users in some cases. For example, if the user is a young child with a small hand, even if a width of an object is equal to or smaller than 3 cm, a grip holding operation is more suitable than pinching. Thus, an attribute indicating "executable" can be automatically set for "grip".

Furthermore, a method of automatically setting an attribute of a virtual object may be a method of estimating an attribute of a virtual object using a machine learning model pre-learned by deep learning. For example, a machine learning model pre-learned by deep learning in such a manner as to estimate an optimum attribute regarding a holding operation on each virtual object, from corresponding real-world data or information regarding the user is used.

### D-3. Change of Behavior That is Made in Accordance with Holding Operation

There is a virtual object of which a behavior varies for each holding operation (described above). A change of a behavior that is caused by a holding operation is sometimes effective even if a virtual object to be held does not exist. For example, a behavior in a virtual space may be varied between a case where the user precisely holds a region in which no virtual object exists, and a case where the user holds the region in a gripping manner.

The application execution unit 1401 recognizes the position of a virtual object arranged in the virtual space. Furthermore, the application execution unit 1401 can detect a position of the hand of the user via the controller 110 installed on the back of the hand of the user, and recognize that a virtual object does not exist at the position. Moreover, the application execution unit 1401 can recognize, via the controller 110, that fingers of the user have performed a gesture such as precise holding or grip holding at the position. Then, the application execution unit 1401 executes different behaviors between the time when the user has performed a grip operation in a region in which no virtual object exists, and the time when the user has performed a pinch operation in the region.

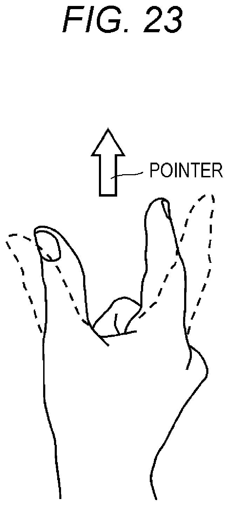

The application execution unit 1401 may switch the display of a user interface (UI) in the virtual space on the basis of a holding operation of the user that is performed in a region in which no virtual object exists. For example, if the user performs a grip operation in a region in which no virtual object exists, the application execution unit 1401 displays a pointer from a fingertip (refer to Fig. 22). Subsequently, if the user performs a pinch operation in a region in which no virtual object exists (refer to Fig. 23), the application execution unit 1401 selects a location indicated by the pointer at the fingertips.

### E. Trigger of Holding Operation

In the AR system 100 according to the present disclosure, when the hand of the user approaches a virtual object, if the user performs a holding operation permitted by an attribute of the virtual object, a behavior of the virtual object that corresponds to the holding operation is executed. However, in some cases, the user happens to move his/her fingers when the position of the hand gets close to a virtual object, without bringing the hand closer with the intention to hold the virtual object. Although the user does not intend to hold the virtual object, a behavior of the virtual object that corresponds to a holding operation is executed.

In view of the foregoing, a state in which the user is looking at a targeted virtual object or the user is interested in a targeted virtual object when the hand of the user gets close to the virtual object may be added to a condition for executing a behavior of the virtual object that corresponds to a holding operation. As a behavior used in holding a real object, it is extremely rare to hold a target object to be held, without looking at the target object. Thus, setting a state in which the user is looking at a virtual object, as a condition of behavior execution can be considered to be close to an actual behavior and reasonable. Furthermore, by adding such a condition, it is possible to prevent a behavior of a virtual object that is unintended by the user, from being executed by a holding operation being recognized in a case where the user does not look at the virtual object.

The application execution unit 1401 can determine whether or not the user is looking at a virtual object, by detecting a line-of-sight direction of the user from a captured image of the inward camera 122, for example. Alternatively, the application execution unit 1401 may be enabled to estimate a degree of interest of the user in a virtual object using a machine learning model pre-learned by deep learning, from sensor information of the controller 110 or the head sensor unit 120. For this reason, the controller 110 and the head sensor unit 120 may include a sensor such as a biological sensor that is other than those illustrated in Fig. 5. Then, when a condition of a state in which the user is looking at a targeted virtual object or the user is interested in a targeted virtual object is satisfied, if the application execution unit 1401 recognizes that the user has performed a holding operation permitted by an attribute of the virtual object, the application execution unit 1401 executes a behavior corresponding to the holding operation of the virtual object, and displays the behavior of the virtual object on the display unit 131 (AR glass).

### F. Behavior Control of Virtual Object That Is Based on Attribute

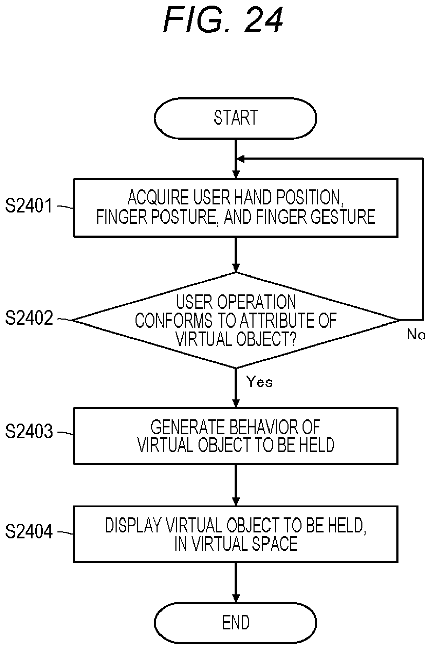

Fig. 24 illustrates, in the form of a flowchart, a processing procedure for implementing a behavior of a virtual object in response to a holding operation performed by the user, on the basis of an attribute of each holding operation preset for the virtual object, in the AR system 100 according to the present disclosure. This processing procedure is executed by the application execution unit 1401 serving as a main actor, for example.

First of all, the application execution unit 1401 acquires, via the controller 110, a detection result of the position of the hand of the user, and recognition results of the postures of fingers and a gesture of the fingers (Step S2401). The application execution unit 1401 is assumed to constantly monitor a virtual object being displayed on the display unit 131, a relative position with the hand of the user who is trying to hold the virtual object, the postures of fingers, and a gesture of the fingers.

Then, if the application execution unit 1401 identifies a virtual object to be held by the user, and determines a holding operation that the user is trying to perform on the virtual object, on the basis of the results acquired in Step S2401, the application execution unit 1401 determines whether or not the holding operation is a holding operation conforming to an attribute preset for the virtual object (Step S2402). Note that, in Step S2402, in addition to determining conformity/unconformity to the attribute, it may be determined whether the user is looking at the virtual object or is interested in the virtual object (i.e., whether or not a condition for executing a behavior of the virtual object is satisfied).

Here, in a case where an operation performed on the virtual object by the user does not conform to an attribute of the virtual object (or in a case where a condition for executing a behavior of the virtual object is not satisfied) (No in Step S2402), the application execution unit 1401 determines that the user is not performing a holding operation of the virtual object, and returns the processing to Step S2401, in which the acquisition of the position of the hand of the user, the postures of fingers, and a gesture of the fingers is continuously performed.

On the other hand, in a case where an operation of the fingers of the user conforms to an attribute of the virtual object (Yes in Step S2402), the application execution unit 1401 generates a behavior to be implemented when the holding operation of the virtual object is performed, on the basis of the attribute of the virtual object (Step S2403).

Then, the application execution unit 1401 renders a virtual object operating in accordance with the behavior generated in Step S2403, displays the virtual object in the virtual space (i.e., the display unit 131 (AR glass)) (Step S2404), and presents the behavior of the virtual object to be held by itself, to the user.

### G. Application to Remote System

For example, there has been known a master-slave system that performs a remote work by driving a robot at an output end on a slave side, by an operator operating a controller on a master side. The remote work is introduced into various industries such as telesurgery and a remote construction work.

In the master-slave system, an operator is assumed to perform an operation of pinching or gripping an object not existing under his/her hand, using a remote robot. A remote operation to be performed by the operator in the master-slave system is equivalent to an operation by which the user pinches or grips a virtual object with fingers through an AR glass in the AR system 100, and the present disclosure can be applied.

In the master-slave system, not a virtual object but a real object installed in a remote location is to be held. In the AR system 100, a plurality of types of holding operations on a virtual object can be defined, and an attribute regarding the executability of each holding operation can be preset for each virtual object. Then, if the user performs a holding operation for which an attribute indicating "executable" is set, on a certain virtual object, a behavior of the virtual object that corresponds to the holding operation is executed. On the other hand, in the master-slave system, holding operations executable on the slave side are defined, and an attribute regarding the executability of each holding operation is preset for each object to be held in a remote location. For example, an attribute indicating that a realistic holding operation is "executable", such as an attribute indicating that "an object smaller than the size of the hand can be pinched but cannot be gripped", is preset for each object. Then, if the master side designates a holding operation for which an attribute indicating "executable" is set for a certain object arranged on the slave side, remote control is performed in such a manner that a slave performs a holding operation of the object in such a manner as to execute the holding operation of the object. Thus, even if the user cannot directly touch a remote object and can only observe the remote object through captured images of a camera, it is possible to hold the remote object by a realistic method using a slave.

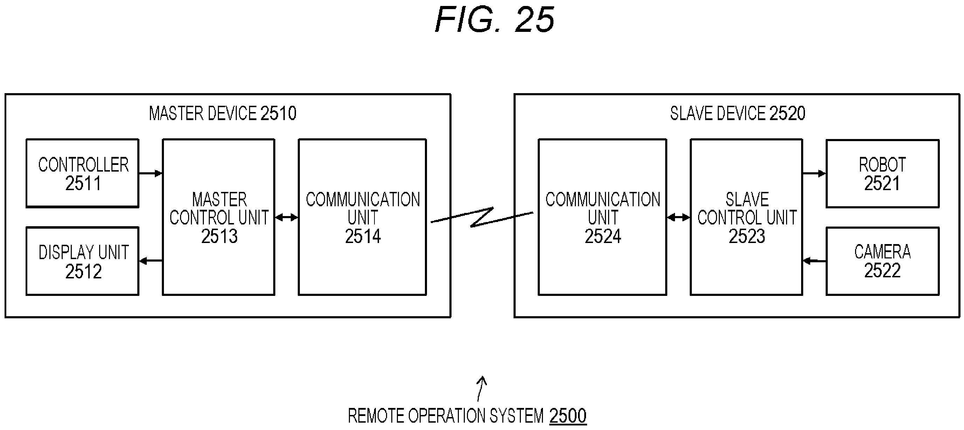

Fig. 25 illustrates a configuration example of a remote operation system 2500 to which the present disclosure is applied. The remote operation system 2500 illustrated in the drawing includes a master device 2510 to be operated by an operator, and a slave device 2520 including a robot 2521 to be remotely operated.

The master device 2510 includes a controller 2511, a display unit 2512, a master control unit 2513, and a communication unit 2514.

The controller 2511 is used for an operator inputting a command for remotely operating the robot 2521 on the slave device 2520 side. In the present embodiment, the controller 2511 is assumed to be a device that is used by being attached to the hand of the operator as illustrated in Fig. 5, and inputs the positions and the postures of fingers of the operator and a gesture of the fingers as an operation command to the robot 2521. Nevertheless, the controller 2511 may be a camera or the like that captures images of the hand of the operator, and image recognition of the positions and the postures of fingers of the operator and a gesture of the fingers may be performed from the captured images of the hand.

The display unit 2512 includes an AR glass, for example, but may be a general display device such as a liquid crystal display. In accordance with the control performed by the master control unit 2513, a virtual object is displayed onto a real space in which fingers of the operator are shown. Here, the virtual object refers to a virtual object corresponding to a remote real-world object that the robot 2521 to be remotely operated is trying to hold. The virtual object is displayed at a location where a relative position with the hand of the operator coincides with a relative position between the robot 2521 and the object.

The master control unit 2513 receives, from the slave device 2520 via the communication unit 2514, an image that has been captured by a camera 2522, and indicates a state of an operation of the remote object that is performed by the robot 2521. Then, the master control unit 2513 controls the display unit 2512 to display a virtual object onto the real space in which fingers of the operator are shown. Furthermore, the master control unit 2513 may control the display unit 2512 to also display the camera image received from the slave device 2520.

Here, the virtual object refers to a virtual object corresponding to a remote real-world object that the robot 2521 to be remotely operated is trying to hold. The virtual object is arranged at a location where a relative position with the hand of the operator coincides with a relative position between the robot 2521 and the object.

For a virtual object, an attribute regarding the executability of each holding operation is preset. For example, an attribute of a virtual object is set on the basis of a realistic holding operation of a corresponding remote object. Alternatively, an attribute regarding the executability of each holding operation on a virtual object is set on the basis of a holding operation of an object that is intended by a designer of the remote operation system 2500.

The master control unit 2513 acquires, via the controller 2511 installed on the back of the hand, information regarding the position of the hand of the user that is set when the operator performs a holding operation of a virtual object, postures of fingers, and a gesture performed by the fingers. Then, in a case where the holding operation performed by the operator conforms to the attribute preset for the virtual object, the master control unit 2513 converts the positions and postures of the fingers of the operator and the gesture of the fingers that have been acquired via the controller 2511, into an operation command for remotely operating the robot 2521, and transmits the operation command to the slave device 2520 via the communication unit 2514.

The communication unit 2514 is a functional module for mutually connecting with the slave device 2520 side. Communication media between the master device 2510 and the slave device 2520 may be either wired media or wireless media. Furthermore, a communication standard is not limited to a specific communication.

The slave device 2520 includes the robot 2521, the camera 2522, a slave control unit 2523, and a communication unit 2524. The slave device 2520 mutually connects with the master device 2510 side via the communication unit 2524, and receives an operation command of the robot 2521 from the master device 2510 and transmits a captured image obtained by the camera 2522, to the master device 2510.

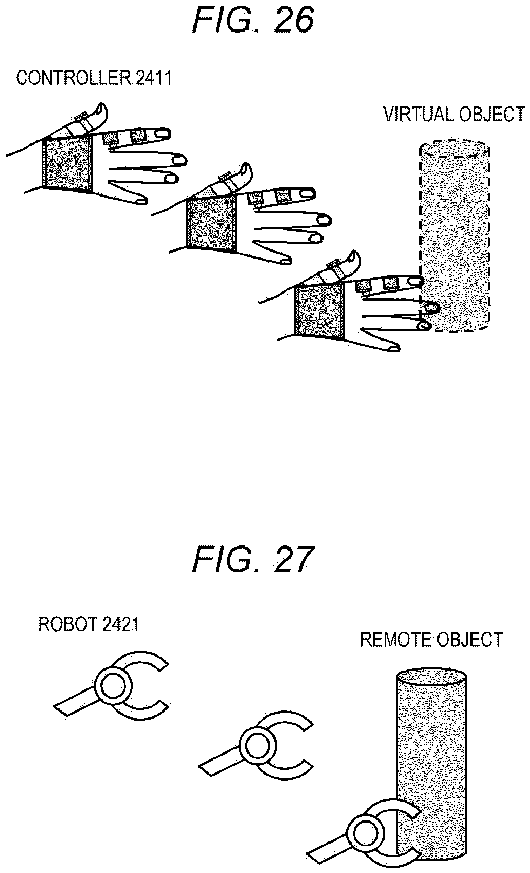

An operation command transmitted from the master device 2510 is a command for driving the robot 2521 in accordance with the positions and postures of the fingers of the operator and the gesture of the fingers. The slave control unit 2523 interprets the operation command received from the master device 2520, and executes a holding operation of an object by controlling the drive of the robot 2521 in such a manner that the robot 2521 reproduces the positions and postures of the fingers of the operator and the gesture of the fingers (i.e., holding operation performed by the operator on the virtual object). Fig. 26 illustrates a state in which an operator is trying to hold a virtual object while approximating his/her hand to the virtual object on the master device 2510 side. Fig. 27 illustrates a state in which the robot 2521 is trying to hold a real object while approaching the real object in such a manner as to follow the movement of the hand of the operator on the slave device 2520 side.

The camera 2522 captures an image of a status of an operation of an object that is performed by the robot 2521. The slave control unit 2523 encodes the captured image obtained by the camera 2522, and controls the captured image to be transmitted from the communication unit 2524 to the master device 2510 in a predetermined transmission format. As described above, on the master device 2510 side, the display unit 2512 displays a virtual object corresponding to an object, onto the real space in which fingers of the operator are shown. The virtual object is arranged at a location where a relative position with the hand of the operator coincides with a relative position between the robot 2521 and the object.

Thus, according to the remote operation system 2500 to which the present disclosure is applied, even if an operator on the master device 2510 side cannot directly touch a remote object existing on the slave device 2520 side, and cannot observe the remote object through captured images obtained by the camera 2522, it is possible to designate an operation of the robot 2521 that is based on a realistic holding operation on a remote object.

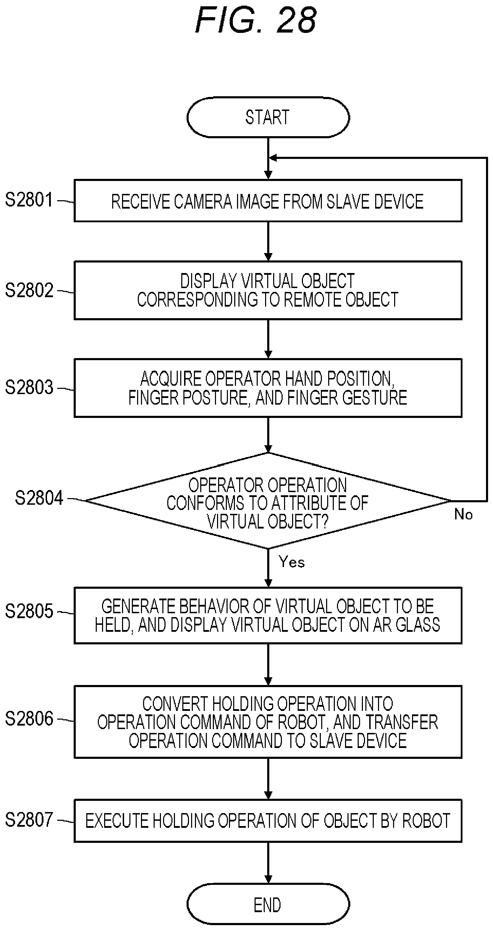

Fig. 28 illustrates, in the form of a flowchart, a processing procedure for an operator performing a holding operation of a remote object in the remote operation system 2500 to which the present disclosure is applied.

If the master device 2510 receives a captured image obtained by the camera 2522, from the slave device 2520 (S2801), the display unit 2512 displays a virtual object corresponding to a remote object to be operated, onto the real space in which fingers of the operator are shown (Step S2802).

The master control unit 2513 acquires, via the controller 2511, a detection result of the position of the hand of the operator, and recognition results of the postures of fingers and a gesture of the fingers (Step S2803). The master control unit 2513 is assumed to constantly monitor a virtual object being displayed on the display unit 2512, a relative position with the hand of the operator who is trying to hold the virtual object, the postures of fingers, and a gesture of the fingers.

Then, if the master control unit 2513 recognizes a holding operation that the operator is trying to perform on the virtual object, on the basis of the results acquired in Step S2803, the master control unit 2513 determines whether or not the holding operation is a holding operation conforming to an attribute preset for the virtual object (Step S2804). For a virtual object, an attribute corresponding to a realistic holding operation permitted for a remote object is preset.

Here, in a case where the operation performed on the virtual object by the operator does not conform to an attribute of the virtual object (No in Step S2804), the master control unit 2513 determines that the operator is not performing a holding operation of the virtual object, and returns the processing to Step S2801, in which the master control unit 2513 receives a captured image obtained by the camera, from the slave device 2520, and updates the display of the virtual object on the display unit 2512.

On the other hand, in a case where an operation of the fingers of the operator conforms to an attribute of the virtual object (Yes in Step S2804), the master control unit 2513 generates a behavior to be implemented when the virtual object is held, on the basis of the attribute of the virtual object, and displays the virtual object operating in accordance with the generated behavior, on the display unit 2512 (Step S2805).

Furthermore, the master control unit 2513 converts the positions and postures of the fingers of the operator and the gesture of the fingers that have been acquired via the controller 2511, into an operation command for remotely operating the robot 2521, and transmits the operation command to the slave device 2520 via the communication unit 2514 (Step S2806). On the slave device 2520 side, the slave control unit 2523 interprets the operation command received from the master device 2520, and executes a holding operation of an object by controlling the drive of the robot 2521 in such a manner that the robot 2521 reproduces the positions and postures of the fingers of the operator and the gesture of the fingers (i.e., holding operation performed by the operator on the virtual object) (Step S2807).

In the remote operation system 2500, by executing the processing procedure illustrated in Fig. 28, even if an operator on the master device 2510 side cannot directly touch a remote object existing on the slave device 2520 side, and cannot observe the remote object through captured images obtained by the camera 2522, it is possible to designate an operation of the robot 2521 that is based on a realistic holding operation on a remote object, through a holding operation on a virtual object displayed on the display unit 2512.

### H. Position and Posture Control of Virtual Object Implemented in Response to Grip Holding Operation

In the present disclosure, two types or more of holding operations on a virtual object that include precise holding and grip holding can be defined, and an attribute regarding the executability of each holding operation can be preset for each virtual object. Then, if a holding operation is performed by the user on a certain virtual object, the AR system 100 can control a behavior of the virtual object in accordance with an attribute set for the virtual object.

If an unreal virtual object is held, fingers slip through the virtual object. For this reason, it is sometimes difficult for the user to hold a virtual object at a desired position. In view of the foregoing, as for a virtual object of which a grip position is determined, when grip holding (i.e., a grip operation performed by the user) is executed, a behavior of changing the position and the posture of a virtual object in such a manner that the grip position fits with the hand of the user may be executed. By such a change in the position and the posture of a virtual object, the virtual object can be held in such a manner that a grip position of the virtual object sticks to the hand of the user. Thus, in this specification, the processing will also be referred to as "sticking processing" or "snap processing". It is only required that, in a case where grip holding is executable, in addition to information regarding executability of each holding operation, executability of sticking processing is also set as an attribute of a virtual object.

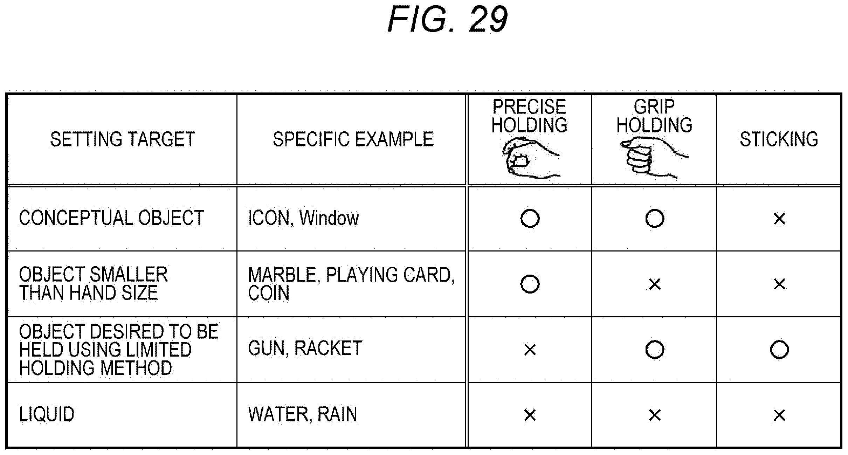

Fig. 29 illustrates an example in which an attribute is preset for each virtual object including executability of sticking processing. In the diagram, "o" represents an attribute indicating "executable", and "×" represents an attribute indicating "inexecutable". According to the attribute setting illustrated in the drawing, as for a virtual object such as a "gun" or a "racket" that is desired to be held using a holding operation limited to "grip holding", an attribute indicating that grip holding (gripping) is "executable" is set, and an attribute indicating that sticking processing is "executable" is further set. On the other hand, as for a conceptual virtual object such as an "icon" or a "Window" as well, because a holding operation and a holding position need not be limited, an attribute indicating "executable" is set for both of precise holding and grip holding, and an attribute indicating that sticking processing is "inexecutable" is set.

The application execution unit 1401 recognizes the position of a virtual object arranged in the virtual space. Furthermore, the application execution unit 1401 can detect the position of the hand of the user via the controller 110 installed on the back of the hand of the user, and recognize the postures of fingers and a gesture of the fingers. For example, if the application execution unit 1401 senses that the user is trying to perform grip holding of a certain virtual object, on the basis of the position of the hand of the user, the postures of fingers, and a gesture of the fingers, the application execution unit 1401 checks whether or not gripping is executable, with reference to an attribute set for the virtual object, and in a case where gripping is executable, the application execution unit 1401 further checks whether or not sticking processing is executable. Then, in the case of a virtual object on which sticking processing is executable, the application execution unit 1401 changes the position and the posture of the virtual object in such a manner that a grip position fits with the hand of the user. Thus, the user can easily hold a virtual object at a desired position.

As illustrated in Fig. 29, because a setting of an attribute including executability of sticking processing in addition to executability of each holding operation is performed, the application execution unit 1401 can implement a behavior of a virtual object for performing sticking processing suitable for grip holding, in the form such as a form in which "if a gun is gripped, the gun is automatically arranged in such a manner as to be at the position and the posture at which a trigger can be pulled with a forefinger", or "if a sword is gripped, the sword is automatically arranged in such a manner as to be at the position and the posture at which a shaft portion fits with the hand". With this configuration, the user can implement a natural and reasonable holding operation suitable for characteristics and the use application of each virtual object, with small load.

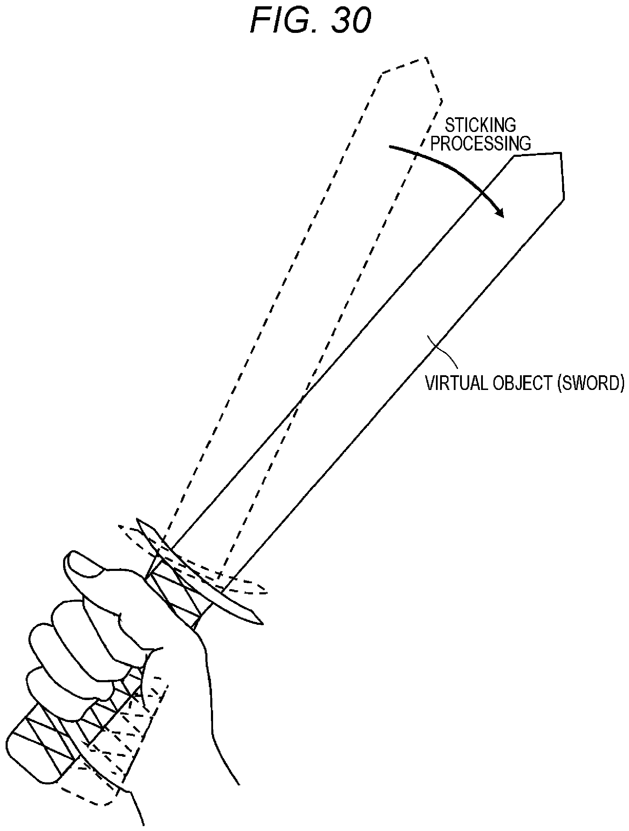

In the setting of the attribute illustrated in Fig. 29, sticking processing is assumed to be performed when "grip holding (grip)" is executed on a virtual object such as a "gun", a "sword", or a "racket", of which a grip position becomes constant. Fig. 30 exemplifies a behavior of a sword changing in position and posture in such a manner that a shaft fits with the hand of the user when the hand of the user approaches a shaft portion of the sword and tries to grip the shaft portion, in a case where a virtual object is a "sword".

Note that, in the above description and Fig. 29, an attribute setting of sticking processing as for a holding operation of "precise holding (pinch)" is omitted. Nevertheless, in a case where an attribute of a virtual object is desired to be set in such a manner that the virtual object is pinched at a specific position, an attribute regarding a behavior of changing the position and the posture of the virtual object such as sticking processing may be similarly set also for a holding operation of "precise holding (pinch)". With this configuration, when precise holding (i.e., pinch operation performed by the user) is performed on a virtual object of which a pinch position is determined, sticking processing of causing the pinch position to fit with the hand of the user can be performed as a behavior of the virtual object. It becomes possible for the user to pinch a predetermined position of a virtual object with low load.

Furthermore, in the above description, sticking processing has been described as one of behaviors (position and posture control) for aiding or supporting a holding operation of a virtual object that is performed by the user, but as processing accompanying a holding operation, for example, display processing of a UI guiding a specific holding operation of a virtual object or other types of processing can also be considered. Thus, as an attribute of a virtual object, executability of a behavior (position and posture control) accompanying a holding operation that is other than sticking processing may be set.

### I. UI Behavior Implemented in Response to Holding Operation

In the present disclosure, two types or more of holding operations on a virtual object that include precise holding and grip holding can be defined, and an attribute regarding the executability of each holding operation can be preset for each virtual object. Then, if a holding operation is performed by the user on a certain virtual object, the AR system 100 can control a behavior of the virtual object in accordance with an attribute preset for the virtual object.

Furthermore, when the user performs a holding operation on a virtual object, a hand slips through the virtual object, and the user cannot obtain realistic tactile feeling. In view of the foregoing, at the time of a holding operation, by executing a UI behavior that stimulates a visual sense, an auditory sense, or a tactile sense of the user, the user may be enabled to intuitively understand that the user is holding a virtual object. A visual UI behavior is performed using the display unit 131 (AR glass). Furthermore, an auditory UI behavior is performed using the speaker 132. Furthermore, a tactile UI behavior is performed using the tactile feedback unit 114 in the controller 110 that is installed on the back of the hand.

When precise holding (pinch) and grip holding (grip) on a virtual object are compared, while the precise holding is a holding operation that uses only fingertips, the grip holding is a holding operation that uses the entire hand including fingers. For example, while tissue paper, a marble, and a small insect are pinched using fingertips, a plastic bottle, a sword, a gun, a racket, and a ball are gripped using the entire hand. In view of the foregoing, as a UI behavior that uses the tactile feedback unit 114, when precise holding is performed, vibration may be presented only to fingertips, and when grip holding is performed, vibration may be presented to the entire hand including fingers. A UI behavior that uses tactile presentation to be executed for each holding operation may be additionally set as an attribute of each virtual object.

Furthermore, contact positions in precise holding (pinch) and grip holding (grip) on a virtual object are compared. In the case of pinching a virtual object, a specific contact position of the virtual object is pinched with fingers. In contrast to this, in the case of gripping a virtual object, as described in the section H described above, the virtual object can be gripped through a behavior of the virtual object for automatically fitting a portion of a handle such as a shaft with the hand of the user who is trying to grip. In some cases, a holdable position of the same virtual object varies among holding operations. In view of the foregoing, when the hand of the user approaches a virtual object, a UI behavior of the virtual object may be changed in accordance with a holding operation that the user is trying to perform.

For example, as an attribute of a virtual object, in addition to executability of each holding operation, information regarding a holdable position for an executable holding operation is set. As a matter of course, as described in the section H described above, executability of a behavior (sticking processing, etc.) of a virtual object that accompanies a holding operation (or executability of each holding operation in each portion) may be set as an attribute. In such a case, when the hand of the user approaches a virtual object by a holding operation for which an attribute "executable" is set, if an approached location is set as a holdable position by an attribute, a UI behavior of the virtual object is changed, but when the hand of the user approaches a location other than the holdable position, a UI behavior of the virtual object is not changed. With this configuration, it becomes possible for the user to intuitively understand a holdable region of a virtual object.

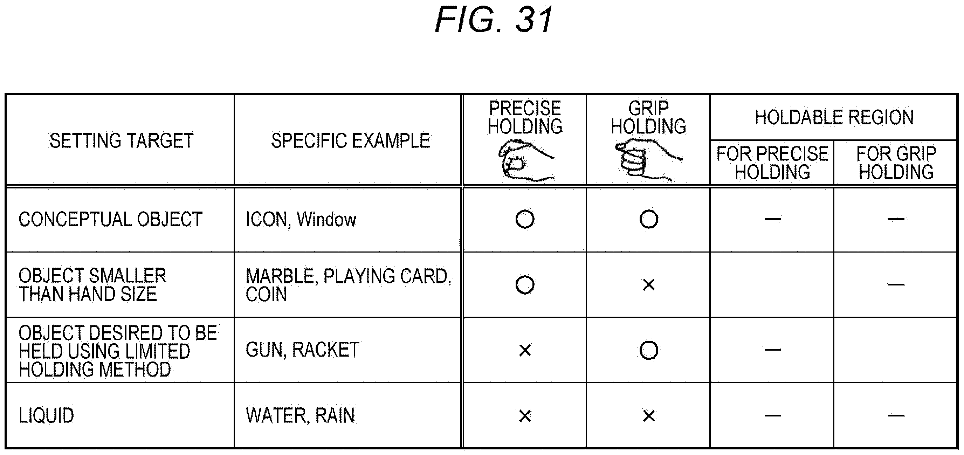

Fig. 31 illustrates an example in which an attribute is preset for each virtual object including a holdable region. In the diagram, "o" represents an attribute indicating "executable", and "×" represents an attribute indicating "inexecutable". Furthermore, as for a holding operation for which an attribute indicating "executable" is set, a holdable region can be further set. As for a virtual object for which an attribute indicating "executable" is set for a plurality of holding operations, a holdable region different for each holding operation may be set, or the same holdable region may be set for a plurality of holding operations. Furthermore, in a case where a plurality of different holdable regions is set for the respective holding operations, a priority order in the plurality of holdable regions (or in a plurality of holding operations) may be made settable. Furthermore, an attribute may be made settable for each virtual object in such a manner as to include executability of processing accompanying a holding operation such as sticking processing, which is not illustrated in Fig. 31. For example, in a case where an attribute including a priority order being an order of a first holdable region and a second holdable region is set for precise holding, if the user performs a gesture of pinching a virtual object, near the intermediate between the first holdable region and the second holdable region, a behavior of the virtual object for sticking to the fingers of the user in the first holdable region can be implemented.

The application execution unit 1401 recognizes the position of a virtual object arranged in the virtual space. Furthermore, the application execution unit 1401 can detect the position of the hand of the user via the controller 110 installed on the back of the hand of the user, and recognize the postures of fingers and a gesture of the fingers. Thus, if the application execution unit 1401 senses a holding operation that the user is trying to perform on a virtual object for holding the virtual object by approaching the virtual object, on the basis of the position of the hand of the user, the postures of fingers, and the gesture of the fingers, the application execution unit 1401 checks whether or not the virtual object can be held by the holding operation, with reference to an attribute set for the virtual object, and if the holding operation is a holding operation that can hold the virtual object, the application execution unit 1401 further checks whether or not a holdable position of the holding operation is set. Then, in a case where the hand approaches the holdable region of the virtual object, the application execution unit 1401 changes a UI behavior of the virtual object. Thus, the user can intuitively understand the holdable region of the virtual object from a UI behavior of the virtual object that is observed through an AR glass.

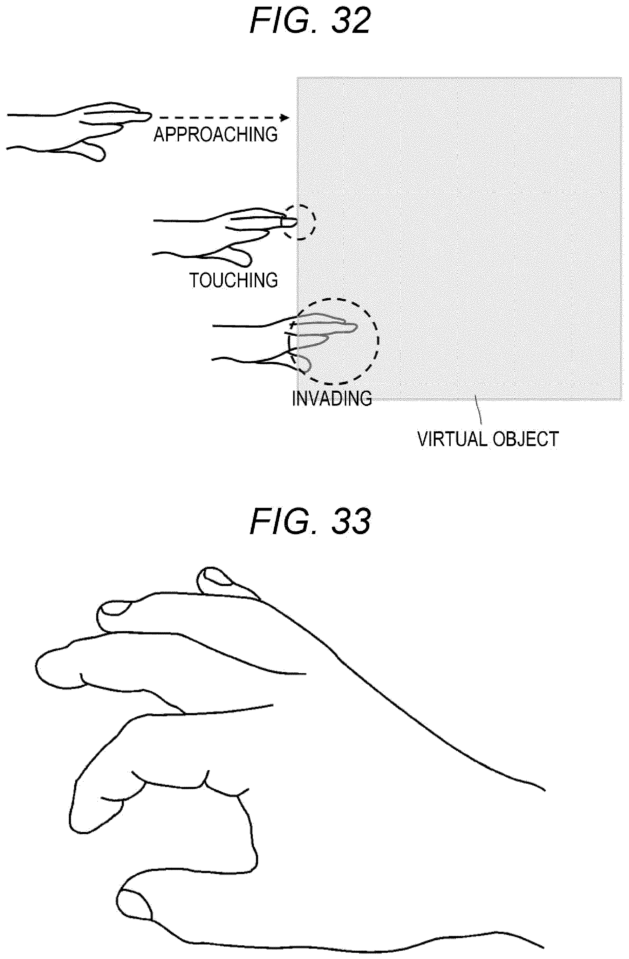

Note that, in this section, for the sake of explanatory convenience, three states including "approaching", "touching", and "invading" are defined as distances between the hand of the user and a virtual object. Fig. 32 illustrates three states including "approaching", "touching", and "invading". The "approaching" is a state in which the shortest distance between the hand of the user and the virtual object becomes equal to or smaller than a predetermined value. The "touching" is a state in which the shortest distance between the hand of the user and the virtual object becomes 0. The "invading" is a state in which the hand of the user intervenes in a region of the virtual object.

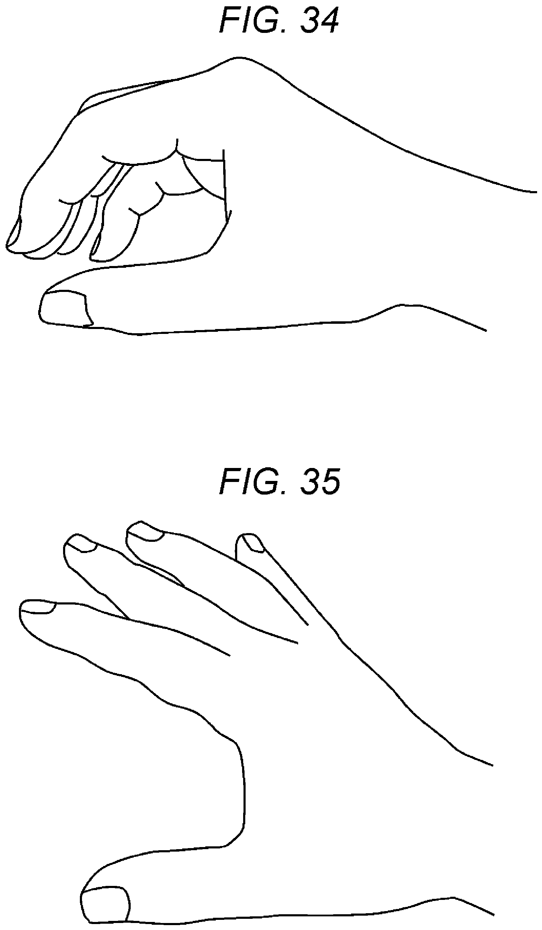

Furthermore, as gestures of fingers that are to be performed when the hand of the user is approaching a virtual object, three types of gestures including "trying to pinch" (refer to Fig. 33), "trying to grip" (refer to Fig. 34), and "not trying to hold" (refer to Fig. 35) are assumed. The application execution unit 1401 can sense that the hand of the user is approaching a virtual object, via the controller 110 installed on the back of the hand of the user, and recognize a type of a gesture performed by the fingers at the time, among the three types described above. When the hand of the user who is trying to hold a virtual object, such as "pinch" or "grip", approaches the virtual object, a UI behavior of a virtual object is changed. On the other hand, even if the hand of the user who is not trying to hold a virtual object approaches the virtual object, because a holding operation is expected to be not performed, a UI behavior of the virtual object is not changed.

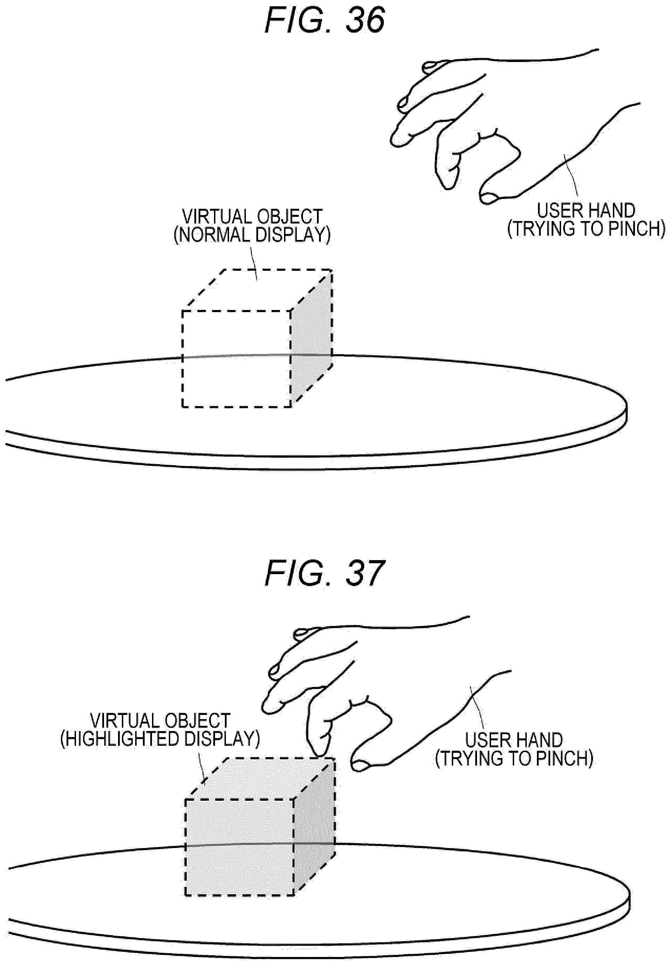

The change of a UI behavior of a virtual object may be switch to highlighted display of a virtual object approached by the hand of the user who is trying to hold the virtual object, for example. Figs. 36 and 37 illustrate a state in which the display of a cubical virtual object is switched from normal display to highlighted display when the hand of the user who is trying to pinch the virtual object approaches the virtual object. Nevertheless, in the example illustrated in Figs. 36 and 37, the user can pinch any location of the virtual object. In other words, the entire virtual object is assumed to be a holdable region, and by the hand of the user approaching the virtual object, the display of the entire virtual object is switched to highlighted display.

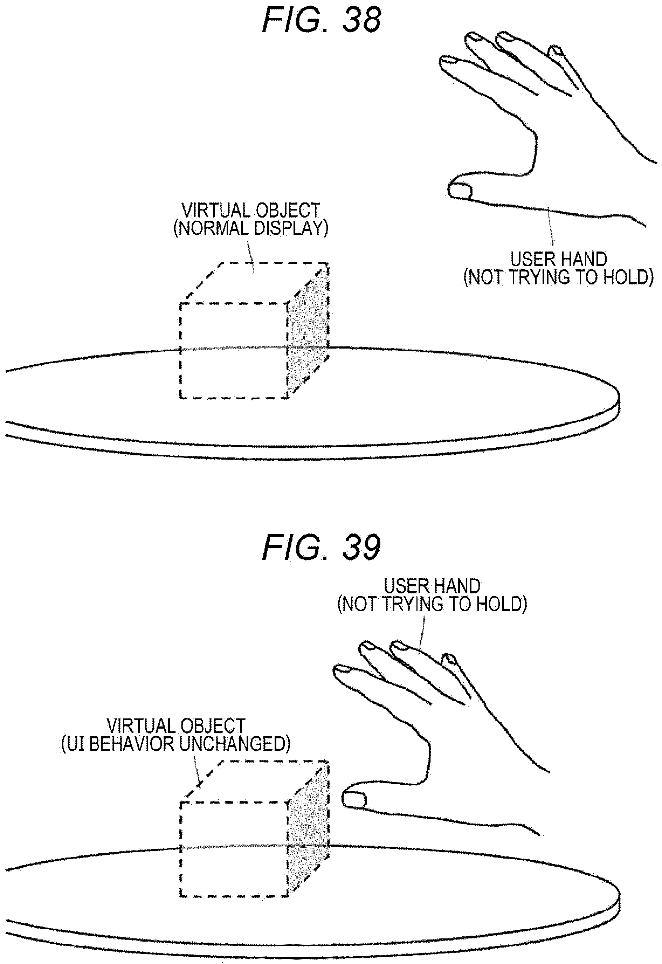

Furthermore, Figs. 38 and 39 illustrate an example in which the hand of the user who is not trying to hold a virtual object approaches the virtual object. Even if the hand of the user who is not trying to hold a virtual object approaches the virtual object, because a holding operation is expected to be not performed, a UI behavior of the virtual object is not changed.

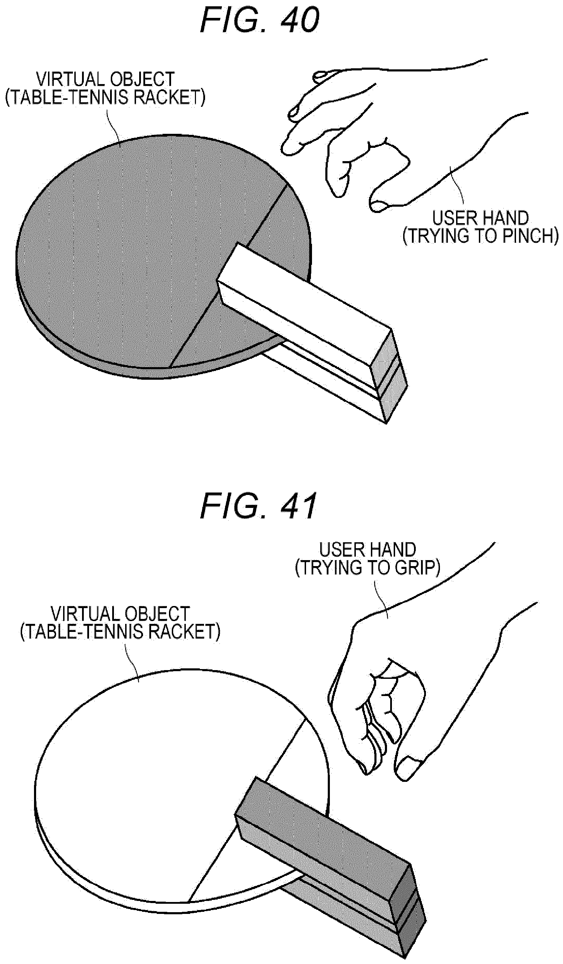

Figs. 40 and 41 illustrate an example of a UI behavior to be implemented when the hand of the user who is trying to hold a virtual object approaches a virtual object being a "table-tennis racket". For the "table-tennis racket", an attribute indicating "executable" is preset for both holding operations of precise holding (pinch) and grip holding (grip). Nevertheless, an attribute indicating that a holdable region to be held when the user holds the racket by pinching the racket is a blade portion of the racket, and an attribute indicating that a holdable region to be held when the user holds the racket by gripping the racket is a grip portion of the racket are set.

Thus, as illustrated in Fig. 40, when the hand of the user who is trying to pinch a virtual object approaches the virtual object, the display of the blade portion of the racket set as a holdable region for precise holding (pinch) switches to highlighted display. The user can intuitively understand that the blade portion can be pinched, by observing a UI behavior of the blade portion of the racket through the AR glass. On the other hand, even if the hand of the user who is trying to grip a virtual object approaches the blade portion of the racket (not illustrated), because an attribute indicating "executable" is not set for grip holding (grip), the display of the blade portion does not switch to highlighted display. Thus, the user can intuitively understand that the blade portion cannot be gripped.

Furthermore, as illustrated in Fig. 41, when the hand of the user who is trying to grip a virtual object approaches the virtual object, the display of the grip portion of the racket set as a holdable region for grip holding (grip) switches to highlighted display. The user can intuitively understand that the grip portion can be gripped, by observing a UI behavior of the grip portion of the racket through the AR glass. On the other hand, even if the hand of the user who is trying to pinch a virtual object approaches the grip portion of the racket (not illustrated), because an attribute indicating "executable" is not set for precise holding (pinch), the display of the grip portion does not switch to highlighted display. Thus, the user can intuitively understand that the grip portion cannot be pinched.

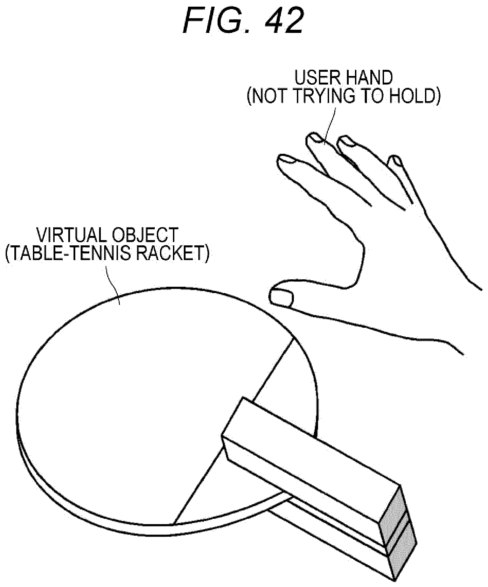

Furthermore, as illustrated in Fig. 42, even if the hand of the user who is not trying to hold a virtual object approaches a virtual object being a table-tennis racket, a UI behavior is not changed.

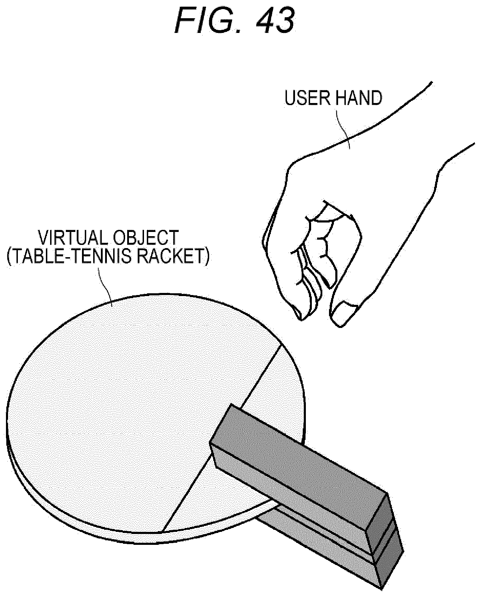

Furthermore, in a case where different holdable regions are set for the respective holding operations as an attribute of a virtual object, the priority order in the plurality of holdable regions may be set. In the case of a virtual object being a "table-tennis racket", as illustrated in Figs. 40 and 41, two holdable regions corresponding to the blade portion and the grip portion are set. In view of a usage pattern of a normal racket, a priority order of grip portion > blade portion can be set. When the hand of the user approaches a "table-tennis racket", as illustrated in Fig. 43, the grip portion is displayed in an emphasized manner more than the blade portion (degree of emphasis is represented by contrasting density in Fig. 43). By switching a change of a UI behavior of each holdable region on the basis of a priority order in this manner, although the user can hold the blade portion and the grip portion, the user can intuitively understand that the grip portion is to be preferentially held.

Note that, in the examples illustrated in Figs. 36 to 43, the user is assumed to perform a UI behavior indicating a holding operation, before performing a holding operation of a virtual object. Aside from UI display performed before a holding operation, after the holding operation is completed, a UI for presenting that an operation of pinching or gripping a virtual object has been completed, to the user may be displayed. By the UI display, the user can intuitively understand which operation of pinching or griping has been executed, after the completion of the holding operation.

Furthermore, as a method of determining a virtual object to be held, in a case where the user executes a holding operation in a virtual space in which a plurality of virtual objects is scattered, for example, the following two methods can be used.
(1) In a case where a pinching gesture of fingers is recognized, a virtual object included in a specific distance from a fingertip is targeted by a holding operation.
(2) In a case where a gripping gesture of fingers is recognized, a virtual object included in a specific distance from a palm is targeted by a holding operation.

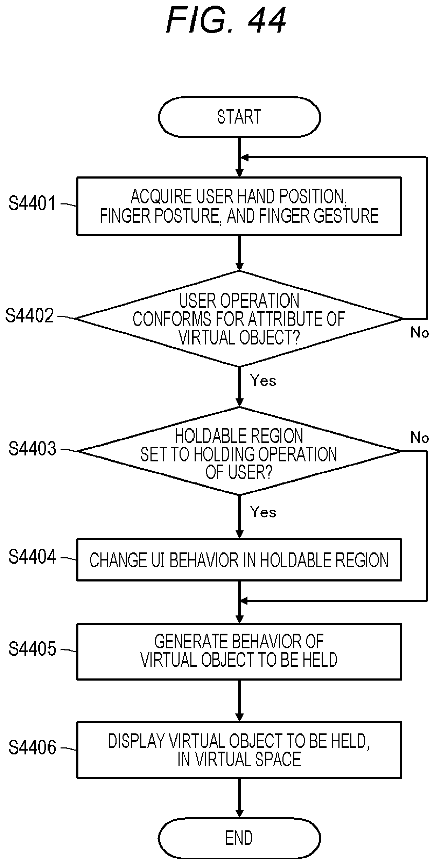

Fig. 44 illustrates, in the form of a flowchart, a processing procedure for implementing a behavior of a virtual object in response to a holding operation performed by the user, on the basis of an attribute of each holding operation preset for the virtual object, in the AR system 100 according to the present disclosure. Nevertheless, the processing procedure illustrated in the diagram differs from the processing procedure illustrated in Fig. 24, in that a holdable region is set for each holding operation, and processing of changing a UI behavior in a holdable region of a virtual object in accordance with a holding operation that the user is trying to perform is included. This processing procedure is executed by the application execution unit 1401 serving as a main actor, for example.

First of all, the application execution unit 1401 acquires, via the controller 110, a detection result of the position of the hand of the user, and recognition results of the postures of fingers and a gesture of the fingers (Step S4401). The application execution unit 1401 is assumed to constantly monitor a virtual object being displayed on the display unit 131, a relative position with the hand of the user who is trying to hold the virtual object, the postures of fingers, and a gesture of the fingers.

Then, if the application execution unit 1401 identifies a virtual object to be held by the user, and recognizes a holding operation that the user is trying to perform, on the basis of the results acquired in Step S4401, the application execution unit 1401 determines whether or not the holding operation is a holding operation conforming to an attribute preset for the virtual object (Step S4402). Note that, in Step S4402, in addition to determining conformity to the attribute, it may be determined whether the user is looking at the virtual object or is interested in the virtual object (i.e., whether or not a condition for executing a behavior of the virtual object is satisfied).

Here, in a case where an operation performed on the virtual object by the user does not conform to an attribute of the virtual object (No in Step S4402), the application execution unit 1401 determines that the user is not performing a holding operation of the virtual object, and returns the processing to Step S4401, in which the acquisition of the position of the hand of the user, the postures of fingers, and a gesture of the fingers is continuously performed.

On the other hand, in a case where an operation of the fingers of the user conforms to an attribute of the virtual object (Yes in Step S4402), the application execution unit 1401 further checks whether or not an attribute of a holdable region is set for the gesture of fingers (i.e., holding operation) acquired in Step S4401 (Step S4403).

In a case where an attribute of a holdable region is set for a holding operation being performed by the user (Yes in Step S4403), the application execution unit 1401 performs processing of changing a UI behavior of the virtual object in the holdable region (Step S4404). As the processing of changing a UI behavior of a virtual object, for example, the display of the holdable region of the virtual object is switched to highlighted display.

By the change of a UI behavior of a virtual object, the user can intuitively understand the holdable region, and hold the virtual object at a correct position. The application execution unit 1401 generates a behavior to be implemented when the virtual object is held, on the basis of the attribute of the virtual object (Step S4405).

Subsequently, the application execution unit 2401 renders a virtual object operating in accordance with the behavior generated in Step S4405, displays the virtual object on the display unit 131 (AR glass) (Step S4406), and presents the behavior of the virtual object to be held by itself, to the user.

Note that, the application execution unit 1401 may control UI display for presenting that an operation of pinching or gripping a virtual object has been completed, to the user, after the holding operation is completed, which is not illustrated in Fig. 44.

### J. Various Hand Interactions with Respect to Virtual Object

An embodiment in which attention is mainly focused on a holding operation as a hand interaction of the user with respect to a virtual object, a plurality of holding operations (for example, precise holding and grip holding) on a virtual object is defined, and an attribute and a behavior of each holding operation are preset for each virtual object has been described above. Various examples of the hand interactions to be performed by the user with respect to a virtual object that are other than a holding operation can be given. According to the present disclosure, by presetting an attribute regarding the executability of each hand interaction for each virtual object while expanding holding operations to all types of hand interactions with respect to a virtual object without limiting hand interactions to holding operations, when a hand interaction of the user is performed with respect to a certain virtual object, a behavior of the virtual object can be controlled on the basis of the preset attribute.

In the description given so far, the application execution unit 1401 recognizes a holding operation (either precise holding or grip holding) that the user is trying to perform on a virtual object, on the basis of the position of the hand of the user and the postures of fingers that are acquired via the controller 110. In contrast to this, by further focusing attention on a difference in angle or speed at which a relative position of a hand with respect to a virtual object targeted by the hand interaction to be performed by the user changes, a hand interaction such as "push", "squash", "slap", or "touch" that is other than a holding operation can be recognized.

Thus, by presetting an attribute regarding executability for each virtual object also for a hand interaction such as "push", "squash", "slap", or "touch" that is other than a holding operation and becomes recognizable on the basis of a difference in angle or speed of a positional change of fingers, when the user performs any hand interaction of "push", "squash", "slap", or "touch" with respect to a certain virtual object, the AR system 100 according to the present disclosure can control a behavior of the virtual object to be implemented in response to the hand interaction, on the basis of the preset attribute.

### J-1. Attribute of Hand Interaction That Corresponds to Difference in Angle of Positional Change

Both "push" and "squash" are performed in a posture in which a hand is opened. For this reason, on the basis of not only positions and postures of fingers, but also an angle of a positional change of the hand (or a direction of getting closer to a virtual object), "push" and "squash" are distinguished from each other. Specifically, the application execution unit 1401 calculates an angle of a positional change of the hand (or a direction of getting closer to a virtual object) on the basis of position information of a virtual object that has been generated by itself, and a hand position and finger postures that are to be momentarily acquired by the hand position acquisition unit 1404 and the finger posture acquisition unit 1405 from the controller 110, and determines which of "push" and "squash" is performed as a hand interaction.

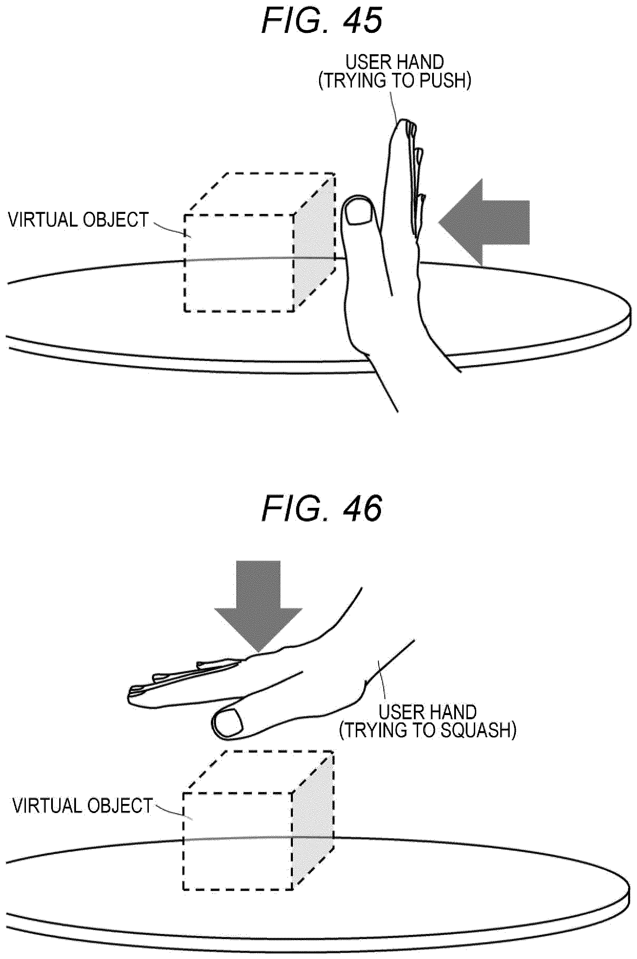

Fig. 45 exemplifies a hand interaction of pushing a virtual object. Furthermore, Fig. 46 exemplifies a hand interaction of squashing a virtual object. Nevertheless, for the sake of simplicity of the drawings, in Figs. 45 and 46, a virtual object is drawn as a simple cube.

As seen from the comparison between Figs. 45 and 46, both "push" and "squash" are hand interactions of getting closer to a virtual object in a hand-opened posture. Nevertheless, while an angle of a positional change of the hand is horizontal to the virtual object in the "push" hand interaction illustrated in Fig. 45, an angle of a positional change of the hand is vertically downward with respect to the virtual object in the "squash" hand interaction illustrated in Fig. 46. Thus, when a gesture of getting closer to a virtual object in a hand-opened posture is performed, if a moving direction of the hand with respect to the virtual object is horizontal (direction of ±10 degree with respect to a horizontal surface), the application execution unit 1401 recognizes that the "push" hand interaction has been performed, and if a moving direction of the hand with respect to the virtual object is vertically downward (direction of 80 to 100 degrees with respect to the horizontal surface), the application execution unit 1401 recognizes that the "squash" hand interaction has been performed.

In the AR system 100 according to the present disclosure, "push" and "squash" are newly defined as hand interactions with respect to a virtual object, and the following attribute is preset for each virtual object.
(1) Whether or not a virtual object can be pushed
(2) Whether or not a virtual object can be squashed

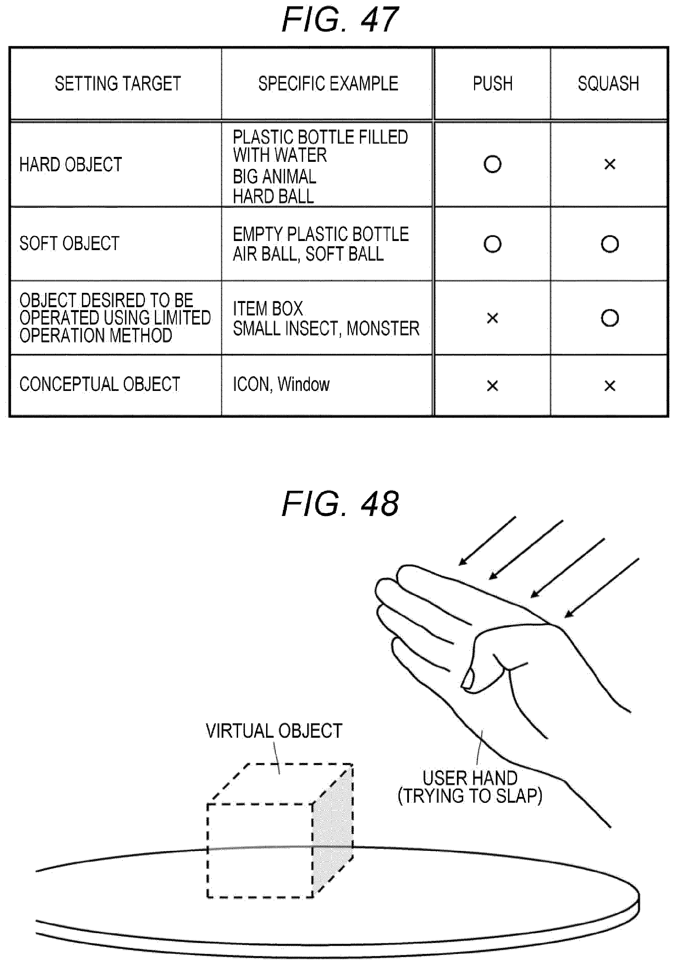

Fig. 47 illustrates an example in which the above-described attribute is preset for each virtual object. In the diagram, "o" represents an attribute indicating that a corresponding hand interaction is "executable (or permitted)", and "×" represents an attribute indicating that a corresponding hand interaction is "inexecutable (or prohibited)". According to the attribute setting illustrated in the drawing, a virtual object being a hard object such as a "plastic bottle filled with water" or a "virtual pet" can be pushed but cannot be squashed. Furthermore, a virtual object being a soft object such as an "empty plastic bottle" or an "air ball" can be pushed and squashed. Furthermore, a virtual object being an object desired to be operated using a limited operation method (for example, an object desired by a producer of content to be squashed by the user), such as an "item box (box containing an item such as an insect or a small monster)" cannot be pushed but can be squashed. Furthermore, a conceptual virtual object such as an "icon" or a "Window" can be neither pushed nor squashed.

According to the attribute setting illustrated in Fig. 47, the user can designate hand interactions of pushing and squashing these virtual objects by a method close to an actual behavior. Then, when a hand interaction of "push" or "squash" is performed with respect to a certain virtual object, the application execution unit 1401 controls a behavior of the virtual object on the basis of an attribute preset as illustrated in Fig. 47.

As for a hand interaction for which an attribute indicating "o" (i.e., "executable") is set, a behavior of a virtual object to be implemented when the hand interaction is executed can also be set together. Nevertheless, for the sake of simplification of the drawings, Fig. 47 only illustrates "o" or "×" as an attribute regarding the executability of "push" and "squash" to be performed with respect to each virtual object, and the description about a behavior is omitted.

### J-2. Setting of Attribute of Hand Interaction That Corresponds to Difference in Angle of Positional Change

Basically, a designer of the AR system 100 or a producer of AR content to be used in the AR system 100 is assumed to manually decide an attribute to be set for each virtual object that corresponds to an angle of a positional change of the hand as illustrated in Fig. 47. Nevertheless, as for a virtual object for which data such as physical characteristics including the shape and the size, and the use application of a corresponding real-world object can be acquired, an attribute regarding "push" and "squash" of the virtual object may be automatically set on the basis of such data. By employing an automatic setting method, it is possible to remove the burden of a producer of content such as an AR application manually setting attributes of all virtual objects, and save the costs of system design and content production.

The method of automatically setting an attribute of a virtual object may be a method of generating an attribute in accordance with an algorithm of analyzing data regarding a corresponding real-world object. For example, an algorithm for performing processing of automatically setting an attribute indicating that a virtual object can be squashed, or the like, if a density of the virtual object is equal to or smaller than 1 g/cm³ may be used.

Furthermore, a method of automatically setting an attribute of a virtual object may be a method of using an algorithm that can change a rule of setting an attribute of a virtual object, on the basis of information regarding the user. For example, a rule of setting an attribute of a virtual object may be changed depending on the age of the user (young child, adult, elderly), the size of the hand, the race, damage to the body, and a hand operation routinely performed by the user. This is because whether or not objects having the same shape, size, or density can be squashed varies among users in some cases. For example, if the user is a young child with a small hand, even if a density of an object is small, the object cannot be squashed. Thus, an attribute regarding "push" and "squash" of each virtual object may be automatically set in view of such an individual difference.

Furthermore, a method of automatically setting an attribute of a virtual object may be a method of estimating an attribute of a virtual object using a machine learning model pre-learned by deep learning. For example, a machine learning model pre-learned by deep learning in such a manner as to estimate an optimum attribute regarding "push" and "squash" of each virtual object, from corresponding real-world data or information regarding the user is used.

### J-3. Trigger of Hand Interaction That Corresponds to Difference in Angle of Positional Change

In the above description, when the user brings his/her hand closer to a virtual object in a hand-opened posture from the horizontal direction or the vertical direction, if the hand interaction is a hand interaction permitted by an attribute of the virtual object, a behavior of the virtual object to be implemented in response to the hand interaction (for example, the virtual object is pushed or squashed) is executed. However, in some cases, the user happens to bring his/her hand closer to a virtual object in a hand-opened posture, without bringing the hand closer to the virtual object with the intention to perform a hand interaction. If a behavior of a virtual object is executed without the intention of the user, the behavior is felt unnatural. In view of the foregoing, a state in which the user is looking at a targeted virtual object or the user is interested in a targeted virtual object may be added to a condition for executing a behavior of the virtual object in response to a hand interaction.

As a behavior used in pushing or squashing a real object, it is extremely rare to push or squash a target object without looking at the target object. Thus, setting a state in which the user is looking at a virtual object, as a condition of behavior execution can be considered to be close to an actual behavior and reasonable. Furthermore, by adding such a condition, it is possible to prevent a behavior of pushing or squashing a virtual object that is unintended by the user, from being executed by a hand interaction being erroneously recognized in a case where the user does not look at the virtual object.

The application execution unit 1401 can determine whether or not the user is looking at a virtual object, by detecting a line-of-sight direction of the user from a captured image of the inward camera 122, for example. Alternatively, the application execution unit 1401 may be enabled to estimate a degree of interest of the user in a virtual object using a machine learning model pre-learned by deep learning, from sensor information of the controller 110 or the head sensor unit 120. Then, when a condition of a state in which the user looks at a targeted virtual object or the user is interested in a targeted virtual object is satisfied, if the application execution unit 1401 recognizes that the user has performed a hand interaction permitted by an attribute of a virtual object, the application execution unit 1401 executes a behavior corresponding to the hand interaction of the virtual object, and displays a behavior in which the virtual object is pushed or squashed, on the display unit 131 (AR glass).

### J-4. Attribute of Hand Interaction That Corresponds to Difference in Speed of Positional Change

Both "slap" and "touch" are performed in a posture in which fingers other than a thumb are opened. For this reason, on the basis of not only positions and postures of fingers, but also a speed of a positional change of the hand (or a relative speed of a hand with respect to a virtual object), "slap" and "touch" are distinguished from each other. Specifically, the application execution unit 1401 calculates a speed of a positional change of the hand (or a relative speed of a hand with respect to a virtual object) on the basis of position information of a virtual object that has been generated by itself, and a hand position and finger postures that are to be momentarily acquired by the hand position acquisition unit 1404 and the finger posture acquisition unit 1405 from the controller 110, and determines which of "slap" and "touch" is performed as a hand interaction.

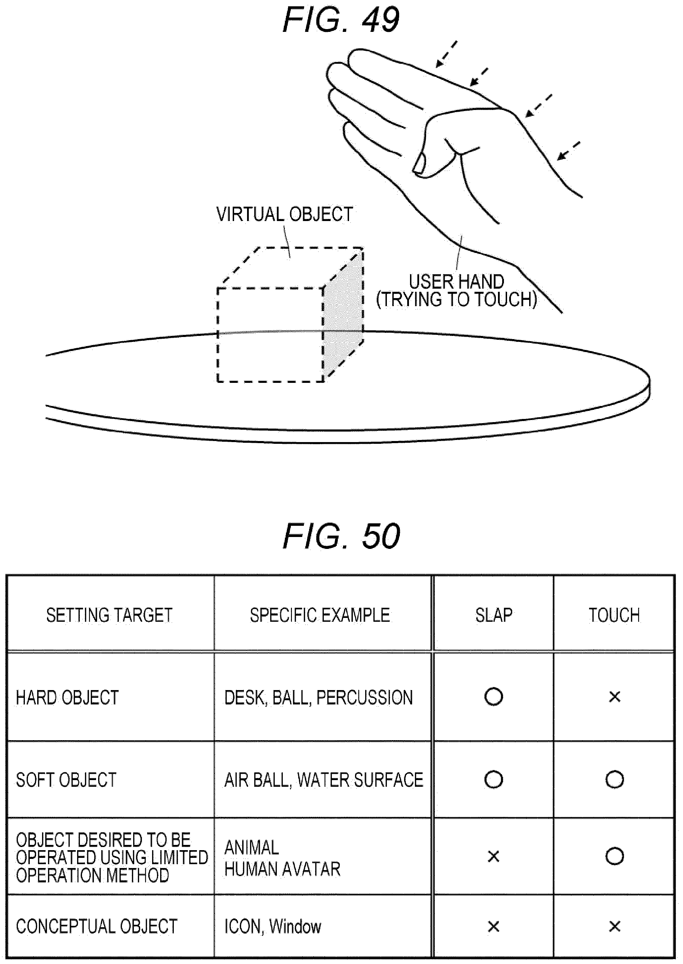

Fig. 48 exemplifies a hand interaction of "slapping" a virtual object. Furthermore, Fig. 49 exemplifies a hand interaction of "touching" a virtual object. Nevertheless, for the sake of simplicity of the drawings, in Figs. 48 and 49, a virtual object is drawn as a simple cube. As seen from the comparison between Figs. 48 and 49, "slap" and "touch" are performed in almost the same posture of fingers for getting closer to a virtual object in a posture in which fingers other than a thumb are opened, but in the case of "slap", a speed of a positional change of the hand is fast (for example, equal to or larger than 3 cm/second), and in the case of "touch", a speed of a positional change of the hand is slow (for example, less than 3 cm/second). Thus, when a gesture of getting closer to a virtual object is performed in a posture in which fingers other than a thumb are opened, if a speed of a positional change of the hand is fast, the application execution unit 1401 recognizes that the "slap" hand interaction has been performed, and if a speed of a positional change of the hand is slow, the application execution unit 1401 recognizes that the "touch" hand interaction has been performed.

Note that, furthermore, in a case where a virtual object itself has a speed, a speed of a positional change of the hand may be calculated on the basis of a relative speed between the speed of the virtual object and the speed of fingers.

Furthermore, as an execution timing of calculation of a speed of a positional change, a time point at which a collider of a virtual object and a collider of fingers get into contact with each other is assumed. Nevertheless, at a time point at which it is detected that the hand of the user is approaching a virtual object, a speed of a positional change may be preliminarily calculated before the contact. By preliminarily calculating a speed of a positional change before the contact, it is possible to suppress delay that might occur in determining which of "slap" and "touch" is performed as a hand interaction.

In the AR system 100 according to the present disclosure, "slap" and "touch" are newly defined as hand interactions with respect to a virtual object, and the following attribute is preset for each virtual object.
(1) Whether or not a virtual object can be slapped
(2) Whether or not a virtual object can be touched

Fig. 50 illustrates an example in which the above-described attribute is preset for each virtual object. In the diagram, "o" represents an attribute indicating that a corresponding hand interaction is "executable (or permitted)", and "×" represents an attribute indicating that a corresponding hand interaction is "inexecutable (or prohibited)". According to the attribute setting illustrated in the drawing, a virtual object being a hard object such as a "desk", a "ball", or a "percussion" can be slapped but cannot be touched. Furthermore, a virtual object being a soft object such as an "air ball" or a "water surface" can be slapped and touched. Furthermore, a virtual object being an object desired to be operated using a limited operation method, such as an "animal" or a "human avatar", cannot be slapped but can be touched. Furthermore, a conceptual virtual object such as an "icon" or a "Window" can be neither slapped nor touched.

According to the attribute setting illustrated in Fig. 50, the user can designate hand interactions of slapping and touching these virtual objects by a method close to an actual behavior. Then, when a hand interaction of the user is performed on a certain virtual object, the application execution unit 1401 controls a behavior of the virtual object on the basis of a preset attribute.

As for a hand interaction for which an attribute indicating "o" (i.e., "executable") is set, a behavior of a virtual object to be implemented when the hand interaction is executed can also be set together. Nevertheless, for the sake of simplification of the drawings, Fig. 50 only illustrates "o" or "×" as an attribute regarding the executability of "slap" and "touch" of each virtual object, and the description about a behavior is omitted.

### J-5. UI behavior Corresponding to Difference in Speed of Positional Change

In the present embodiment in which a hand interaction corresponding to a difference in a speed of a positional change of the hand is performed, a UI behavior of a virtual object that corresponds to a speed of a positional change of the hand that is set when a virtual object and fingers get into contact with each other may be set.

For example, in a case where a virtual object is a "ball", if the ball has a fixed speed or more, a UI behavior of the virtual object is set in such a manner as to generate a behavior of the ball sticking to the hand, or sound (ball catch sound "thwock", etc.) with volume and acoustic quality corresponding to a relative speed. On the other hand, in a case where a ball is stationary or a speed is less than a fixed speed, a UI behavior of a virtual object is set in such a manner as to not generate sticking processing or sound effects.

In a case where a real object such as a "drum" or a "desk" that corresponds to a virtual object generates large hitting sound when being slapped, hitting sound with large volume corresponding to a relative speed may be set as a UI behavior. Furthermore, as for a virtual object such as a "monster" that is desired to be provided with a sound effect for specific hand interaction, hitting sound with large volume corresponding to a relative speed may be set for "slap" as a UI behavior as well.

Furthermore, together with a UI behavior of performing auditory presentation like hitting sound for a hand interaction of "slapping" a virtual object (or in place of the auditory presentation), a UI behavior of performing tactile presentation that uses vibration or the like may be set. For example, a UI behavior of presenting high-frequency vibration to a hand or fingers using the tactile feedback unit 114 may be set for a hand interaction of "slapping" a virtual object such as a "drum", a "desk", or a "monster" described above.

On the other hand, in a case where a real object such as an "animal", a "tree surface", or a "water surface" that corresponds to a virtual object generates small contact sound when being touched, contact sound with small volume corresponding to a relative speed may be set as a UI behavior..

Furthermore, together with a UI behavior of performing auditory presentation like contact sound for a hand interaction of "touching" a virtual object (or in place of the auditory presentation), a UI behavior of performing tactile presentation that uses vibration or the like may be set. For example, a UI behavior of presenting low-frequency vibration to a hand or fingers using the tactile feedback unit 114 may be set for a hand interaction of "touching" a virtual object such as an "animal", a "tree surface", or a "water surface" described above.

### J-6. Setting of Attribute of Hand Interaction That Corresponds to Difference in Speed of Positional Change

Basically, a designer of the AR system 100 or a producer of AR content to be used in the AR system 100 is assumed to manually decide an attribute to be set for each virtual object that corresponds to a speed of a positional change of the hand as illustrated in Fig. 50. Nevertheless, as for a virtual object for which data such as physical characteristics including the shape, the size, the weight, and the hardness, and the use application of a corresponding real-world object can be acquired, an attribute regarding "slap" and "touch" of the virtual object may be automatically set on the basis of such data. By employing an automatic setting method, it is possible to remove the burden of a producer of content such as an AR application manually setting attributes of all virtual objects, and save the costs of system design and content production.

The method of automatically setting an attribute of a virtual object may be a method of generating an attribute in accordance with an algorithm of analyzing data regarding a corresponding real-world object. For example, an algorithm of setting a UI behavior for a "slap" hand interaction on the basis of a degree of hardness of a surface of a corresponding real-world object may be used. By using such an algorithm, if the degree of hardness of the surface of the corresponding real-world object is equal to or larger than a predetermined degree, "slapping" can be made "executable" and a UI behavior of generating slap sound can be automatically set. On the other hand, if the degree of hardness is less than a predetermined degree, "slapping" can be made "inexecutable" and a UI behavior of not generating slap sound can be automatically set.

Furthermore, a method of automatically setting an attribute of a virtual object may be a method of using an algorithm that can change a rule of setting an attribute of a virtual object, on the basis of information regarding the user. For example, a rule of setting an attribute of a virtual object may be changed depending on the age of the user (young child, adult, elderly), the size of the hand, the race, damage to the body, and a hand operation routinely performed by the user. If the user is an elderly, it is difficult to swiftly move fingers due to muscle weakness. In view of such an individual difference, an attribute may be automatically set by setting a threshold value of a speed of a positional change for determining "slap" and "touch" for each virtual object, to 1 cm/second, which is slower than a normal speed of 3 cm/second.

Furthermore, a method of automatically setting an attribute of a virtual object may be a method of estimating an attribute of a virtual object using a machine learning model pre-learned by deep learning. For example, a machine learning model pre-learned by deep learning in such a manner as to estimate an optimum attribute regarding "slap" and "touch" of each virtual object, from corresponding real-world data or information regarding the user is used.

### J-7. Trigger of Hand Interaction That Corresponds to Difference in Speed of Positional Change

In the above description, when the user brings his/her hand closer to a virtual object quickly or slowly in a posture in which fingers other than a thumb are opened, if the hand interaction is a hand interaction permitted by an attribute of the virtual object, a behavior of the virtual object to be implemented in response to the hand interaction (for example, the virtual object is slapped or touched) is executed. However, in some cases, the user happens to bring his/her hand closer to a virtual object in a posture in which fingers other than a thumb are opened, without bringing the hand closer to the virtual object with the intention to perform a hand interaction. If a behavior of a virtual object is executed without the intention of the user, the behavior is felt unnatural. In view of the foregoing, a state in which the user is looking at a targeted virtual object or the user is interested in a targeted virtual object may be added to a condition for executing a behavior of the virtual object in response to a hand interaction.

As a behavior used in slapping or touching a real object, it is extremely rare to slap or touch a target object without looking at the target object. Thus, setting a state in which the user is looking at a virtual object, as a condition of behavior execution can be considered to be close to an actual behavior and reasonable. Furthermore, by adding such a condition, it is possible to prevent a behavior of slapping or touching a virtual object that is unintended by the user, from being executed by a hand interaction being erroneously recognized in a case where the user does not look at the virtual object.

The application execution unit 1401 can determine whether or not the user is looking at a virtual object, by detecting a line-of-sight direction of the user from a captured image of the inward camera 122, for example. Alternatively, the application execution unit 1401 may be enabled to estimate a degree of interest of the user in a virtual object using a machine learning model pre-learned by deep learning, from sensor information of the controller 110 or the head sensor unit 120. Then, when a condition of a state in which the user looks at a targeted virtual object or the user is interested in a targeted virtual object is satisfied, if the application execution unit 1401 recognizes that the user has performed a hand interaction permitted by an attribute of a virtual object, the application execution unit 1401 executes a behavior corresponding to the hand interaction of the virtual object, and displays a behavior in which the virtual object is slapped or touched, on the display unit 131 (AR glass).

### J-8. Behavior Control of Virtual Object That Is Based on Attribute

In the section F described above, a processing procedure for implementing a behavior of a virtual object that is to be implemented when the user performs a holding operation has been described with reference to the flowchart illustrated in Fig. 24. In this section J-8, hand interactions are not limited to holding operations, and processing for implementing a behavior of a virtual object in accordance with various hand interactions of the user will be described.

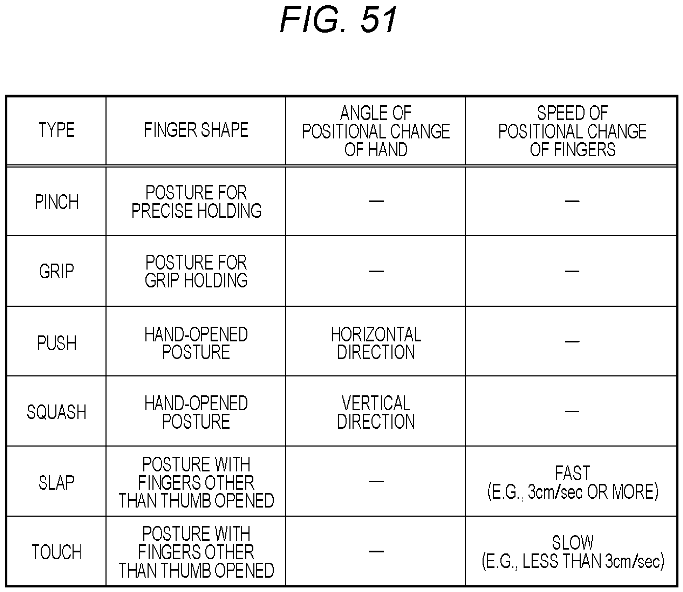

Features of hand interactions to be handled in this section J-8 are summarized in Fig. 51. The diagram exemplifies postures of fingers and determination criteria (an angle of a positional change of the hand, a speed of a positional change of fingers) for six types of hand actions including precise holding (pinch), grip holding (grip), push, squash, slap, and touch.

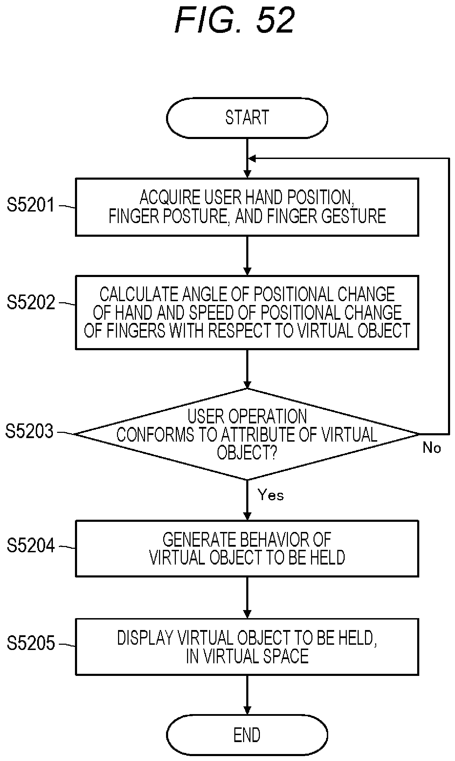

Fig. 52 illustrates, in the form of a flowchart, a processing procedure for implementing a behavior of a virtual object in response to a hand action performed by the user, on the basis of an attribute of each hand action preset for the virtual object, in the AR system 100 according to the present disclosure.

First of all, the application execution unit 1401 acquires, via the controller 110, a detection result of the position of the hand of the user, and recognition results of the postures of fingers and a gesture of the fingers (Step S5201). The application execution unit 1401 is assumed to constantly monitor a virtual object being displayed on the display unit 131, a relative position with the hand of the user who is trying to hold the virtual object, the postures of fingers, and a gesture of the fingers.

Subsequently, the application execution unit 1401 calculates an angle of a positional change of the hand with respect to the virtual object, and a speed of a positional change of fingers with respect to the virtual object (Step S5202).

Then, if the application execution unit 1401 identifies a virtual object to be used by the user as a target of a hand interaction, and determines a hand interaction that the user is trying to perform on the virtual object, on the basis of the results acquired in Step S5201, and the calculation result acquired in Step S5202, the application execution unit 1401 determines whether or not the hand interaction is a hand interaction conforming to an attribute preset for the virtual object (Step S5203). Note that, in Step S5203, in addition to determining conformity/unconformity to the attribute, it may be determined whether the user is looking at the virtual object or is interested in the virtual object (i.e., whether or not a condition for executing a behavior of the virtual object is satisfied).

Here, in a case where a hand interaction performed on the virtual object by the user does not conform to an attribute of the virtual object (or in a case where a condition for executing a behavior of the virtual object is not satisfied) (No in Step S5203), the application execution unit 1401 determines that the user is not performing a hand interaction with respect to the virtual object, and returns the processing to Step S5201, in which the acquisition of the position of the hand of the user, the postures of fingers, and a gesture of the fingers is continuously performed.

On the other hand, in a case where the hand interaction of the user conforms to an attribute of the virtual object (Yes in Step S5203), the application execution unit 1401 generates a behavior to be implemented when the hand interaction is performed with respect to the virtual object, on the basis of the attribute of the virtual object (Step S5204).

Then, the application execution unit 1401 renders a virtual object operating in accordance with the behavior generated in Step S5204, displays the virtual object in the virtual space (i.e., the display unit 131 (AR glass)) (Step S5205), and presents the behavior of the virtual object for which the hand interaction has been performed by itself, to the user.

### INDUSTRIAL APPLICABILITY

Heretofore, the present disclosure has been described in detail with reference to a specific embodiment. However, it is obvious that the one skilled in the art can modify or substitute the embodiment without departing from the scope of the present disclosure.

In this specification, an embodiment in which a hand interaction (holding operation, etc.) of a virtual object according to the present disclosure is mainly applied to an AR system has been mainly described, but the scope of the present disclosure is not limited to this. For example, the present disclosure can also be similarly applied to a VR system that causes a virtual space to be perceived as reality, an MR system that mixes reality and imaginariness, and further to a remote system using a master-slave method, and the like.

In short, the present disclosure has been exemplarily described, and content described in this specification is not to be construed in a limited way. For determining the scope of the present disclosure, the appended claims are to be referred to.

Note that the present disclosure can employ the following configurations.
(1) An information processing device including:
   an acquisition unit configured to acquire a position of a hand of a user and a posture of a finger; and
   a control unit configured to control a display operation of a display device configured to display a virtual object with being superimposed on a real space,
   in which the control unit determines a hand interaction that the user is trying to perform, and a virtual object targeted by the hand interaction, on the basis of the position of the hand and the posture of the finger that have been acquired by the acquisition unit, and controls a behavior of the virtual object to be implemented in response to the hand interaction, on the basis of an attribute set for the virtual object.
(2) The information processing device according to (1) described above,
   in which a hand interaction is defined, and the attribute including executability of each hand interaction is preset for each virtual object, and
   the control unit controls a behavior of a virtual object to be implemented in response to a hand interaction of a user that is set by the attribute to be executable.
(3) The information processing device according to any of (1) or (2) described above,
   in which the control unit determines a hand interaction that the user is trying to perform, from among a plurality of types of predefined hand interactions, on the basis of the position of the hand and the posture of the finger that have been acquired by the acquisition unit.
(4) The information processing device according to any of (1) to (3) described above,
   in which the control unit determines which holding operation is performed out of precise holding of pinching with a thumb and a forefinger or grip holding of gripping using three or more fingers, and controls a behavior of a virtual object to be implemented in response to the determined holding operation, on the basis of the attribute by which executability of precise holding and grip holding is set for each virtual object.
(5) The information processing device according to any of (1) to (4) described above,
   in which the control unit further determines a hand interaction that the user is trying to perform, on the basis of an angle of a positional change of the hand with respect to the virtual object.
(6) The information processing device according to any of (1) to (5) described above,
   in which the control unit determines a hand interaction of "pushing" the virtual object, when getting closer to the virtual object from a horizontal direction, and determines an interaction of "squashing" the virtual object, when getting closer to the virtual object from a vertical direction, in a hand-opened posture, and controls a behavior of the virtual object to be implemented in response to the determined "push" and "squash" hand interactions, on the basis of the attribute by which executability of "push" and "squash" is set for each virtual object.
(7) The information processing device according to any of (1) to (6) described above,
   in which the control unit further determines a hand interaction that the user is trying to perform, on the basis of a speed of a positional change of the finger with respect to the virtual object.
(8) The information processing device according to any of (1) to (7) described above,
   in which the control unit determines a hand interaction of "slapping" the virtual object, when getting closer to the virtual object at a speed equal to or larger than a predetermined speed, and determines an interaction of "touching" the virtual object, when getting closer to the virtual object at a speed smaller than a predetermined speed, in a finger-opened posture, and controls a behavior of the virtual object to be implemented in response to the determined "slap" and "touch" hand interactions, on the basis of the attribute by which executability of "slap" and "touch" is set for each virtual object.
(9) The information processing device according to any of (1) to (8) described above,
   in which the control unit controls, on the basis of the attribute by which executability of a second hand interaction of a first virtual object before and after execution of a first hand interaction on the first virtual object is further set, a behavior of the first virtual object to be implemented when the user performs the second hand interaction subsequently to the first hand interaction.
(10) The information processing device according to any of (1) to (9) described above,
   in which the control unit controls, on the basis of the attribute by which executability of a first hand interaction on a second virtual object and a behavior of the second virtual object to be implemented in response to the first hand interaction are set, a behavior of the second virtual object to be implemented when the user performs the first hand interaction with respect to the second virtual object.
(11) The information processing device according to any of (1) to (10) described above,
   in which the control unit controls, on the basis of the attribute by which executability of a holding operation on a second virtual object and executability of a behavior of changing a position and a posture of the second virtual object in such a manner that a position held by the user fits with the hand of the user are set, a position and a posture of the second virtual object that are set when the user holds the second virtual object.
(12) The information processing device according to any of (1) to (11) described above,
   in which the control unit controls, on the basis of the attribute by which executability of each hand interaction with respect to each virtual object and a position at which a hand interaction is executable are set, a behavior of a certain virtual object to be implemented when the user performs a hand interaction with respect to a certain location of the virtual object.
(13) The information processing device according to any of (1) to (12) described above,
   in which the control unit further controls, on the basis of the attribute by which executability of each hand interaction with respect to each virtual object and a behavior of a user interface for a hand interaction are set, a behavior of a user interface to be implemented when the user performs a hand interaction with respect to a certain location of a certain virtual object.
(14) The information processing device according to any of (1) to (13) described above,
   in which the control unit further controls, on the basis of the attribute by which executability of each hand interaction with respect to each virtual object and a behavior of a user interface at a position at which a hand interaction is executable are set, a behavior of a user interface at a corresponding executable position that is to be implemented when the user performs a hand interaction with respect to a certain location of a certain virtual object.
(15) An information processing method including:
   an acquisition step of acquiring a position of a hand of a user and a posture of a finger; and
   a control step of controlling a display operation of a display device configured to display a virtual object with being superimposed on a real space,
   in which, in the control step, a hand interaction that the user is trying to perform, and a virtual object targeted by the hand interaction are determined on the basis of the position of the hand and the posture of the finger that have been acquired in the acquisition step, and a behavior of the virtual object to be implemented in response to the hand interaction is controlled on the basis of an attribute set for the virtual object.
(16) A computer program described in a computer-readable format in such a manner as to cause a computer to function as:
   an acquisition unit configured to acquire a position of a hand of a user and a posture of a finger; and
   a control unit configured to control a display operation of a display device configured to display a virtual object with being superimposed on a real space,
   in which the control unit determines a hand interaction that the user is trying to perform, and a virtual object targeted by the hand interaction, on the basis of the position of the hand and the posture of the finger that have been acquired by the acquisition unit, and controls a behavior of the virtual object to be implemented in response to the hand interaction, on the basis of an attribute set for the virtual object.
(17) An augmented reality system including:
   a display device configured to display a virtual object with being superimposed on a real space; and
   a control unit configured to control a display operation of a display device configured to display a virtual object with being superimposed on a real space,
   in which the control unit determines a hand interaction that the user is trying to perform, and a virtual object targeted by the hand interaction, on the basis of the position of the hand and the posture of the finger that have been acquired by the acquisition unit, and controls a behavior of the virtual object to be implemented in response to the hand interaction, on the basis of an attribute set for the virtual object.
(21) An information processing device including:
   an acquisition unit configured to acquire a position of a hand of a user and a gesture of a finger; and
   a control unit configured to control a display operation of a display device configured to display a virtual object with being superimposed on a real space,
   in which the control unit controls a behavior of the virtual object to be implemented in accordance with the position of the hand and the gesture of the finger that have been acquired by the acquisition unit, on the basis of an attribute set for the virtual object.
(22) The information processing device according to (21) described above,
   in which the control unit detects that a hand trying to hold approaches a virtual object, on the basis of the position of the hand and the gesture of the finger that have been acquired by the acquisition unit, and controls a behavior of the virtual object to be implemented in response to a holding operation performed by the hand.
(23) The information processing device according to any of (21) or (22) described above,
   in which a plurality of holding operations is defined, and the attribute regarding executability of each holding operation on a virtual object is set, and
   the control unit controls a behavior of the virtual object to be implemented in response to a holding operation of the user that is set by the attribute to be executable.
(24) The information processing device according to (23) described above,
   in which the attribute including a behavior of a virtual object for each holding operation is further set, and
   the control unit controls a behavior of the virtual object to be implemented in response to a holding operation of the user, on the basis of a behavior set by the attribute.
(25) The information processing device according to any of (23) or (24) described above,
   in which the attribute including executability of each holding operation on a virtual object before holding and after holding is further set, and
   the control unit controls a behavior of the virtual object to be implemented in response to a holding operation set by the attribute to be executable before holding and after holding.
(26) The information processing device according to any of (23) to (25) described above,
   in which the attribute including executability of processing accompanying a holding operation is further set, and
   the control unit controls a behavior of the virtual object that includes processing set by the attribute to be executable, in response to a holding operation of the user.
(27) The information processing device according to (26) described above,
   in which processing accompanying a holding operation includes sticking processing of changing a position and a posture of a virtual object in such a manner that a position held by the user fits with the hand of the user.
(28) The information processing device according to any of (23) to (27) described above,
   in which the attribute regarding a user interface in each holding operation on a virtual object is further set, and
   the control unit controls the display device to perform a display operation of a user interface set by the attribute, in response to a holding operation of the user.
(29) The information processing device according to (28) described above,
   in which the attribute regarding a user interface at a holdable position of a virtual object for each holding operation is set, and
   the control unit controls the display device to perform a display operation of a user interface at a holdable position set by the attribute, in response to a holding operation of the user.
(30) An information processing device including:
   an acquisition step of acquiring a position of a hand of a user and a gesture of a finger; and
   a control step of controlling a display operation of a display device configured to display a virtual object with being superimposed on a real space,
   in which, in the control step, a behavior of the virtual object to be implemented in accordance with the position of the hand and the gesture of the finger that have been acquired by the acquisition unit is controlled on the basis of an attribute set for the virtual object.
(31) A computer program described in a computer-readable format in such a manner as to cause a computer to function as:
   an acquisition unit configured to acquire a position of a hand of a user and a gesture of a finger; and
   a control unit configured to control a display operation of a display device configured to display a virtual object with being superimposed on a real space,
   in which the control unit controls a behavior of the virtual object to be implemented in accordance with the position of the hand and the gesture of the finger that have been acquired by the acquisition unit, on the basis of an attribute set for the virtual object.
(32) An augmented reality system including:
   a display device configured to display a virtual object with being superimposed on a real space;
   an acquisition unit configured to acquire a position of a hand of a user and a gesture of a finger; and
   a control unit configured to control a display operation of the display device,
   in which the control unit controls a behavior of the virtual object to be implemented in accordance with the position of the hand and the gesture of the finger that have been acquired by the acquisition unit, on the basis of an attribute set for the virtual object.

### REFERENCE SIGNS LIST

- 10: Controller
- 11: Belt
- 100: AR system
- 110: Controller
- 111: Hand position detection unit
- 112: Finger posture recognition unit
- 113: Finger gesture recognition unit
- 114: Tactile feedback unit
- 120: Head sensor unit
- 121: Outward camera
- 122: Inward camera
- 123: Microphone
- 124: Gyro sensor
- 125: Acceleration sensor
- 126: Orientation sensor
- 131: Front cover portion
- 132: Speaker
- 133: Communication unit
- 140: Control unit
- 150: Storage unit
- 300: AR system
- 301: AR glass
- 302: Controller
- 400: AR system
- 401: AR glass
- 402: Controller
- 403: Information terminal
- 500: Controller
- 501, 502, 503: IMU
- 511, 512, 513: Band
- 2500: Remote operation system
- 2510: Master device
- 2511: Controller
- 2512: Display unit
- 2513: Master control unit
- 2514: Communication unit
- 2520: Slave device
- 2521: Robot
- 2522: Camera
- 2523: Slave control unit
- 2524: Communication unit

## Claims

1. An information processing device comprising:
an acquisition unit configured to acquire a position of a hand of a user and a posture of a finger; and
a control unit configured to control a display operation of a display device configured to display a virtual object with being superimposed on a real space,
wherein the control unit determines a hand interaction that the user is trying to perform, and a virtual object targeted by the hand interaction, on a basis of the position of the hand and the posture of the finger that have been acquired by the acquisition unit, and controls a behavior of the virtual object to be implemented in response to the hand interaction, on a basis of an attribute set for the virtual object.

2. The information processing device according to claim 1,
wherein a hand interaction is defined, and the attribute including executability of each hand interaction is preset for each virtual object, and
the control unit controls a behavior of a virtual object to be implemented in response to a hand interaction of a user that is set by the attribute to be executable.

3. The information processing device according to claim 1,
wherein the control unit determines a hand interaction that the user is trying to perform, from among a plurality of types of predefined hand interactions, on a basis of the position of the hand and the posture of the finger that have been acquired by the acquisition unit.

4. The information processing device according to claim 1,
wherein the control unit determines which holding operation is performed out of precise holding of pinching with a thumb and a forefinger or grip holding of gripping using three or more fingers, and controls a behavior of a virtual object to be implemented in response to the determined holding operation, on a basis of the attribute by which executability of precise holding and grip holding is set for each virtual object.

5. The information processing device according to claim 1,
wherein the control unit further determines a hand interaction that the user is trying to perform, on a basis of an angle of a positional change of the hand with respect to the virtual object.

6. The information processing device according to claim 1,
wherein the control unit determines a hand interaction of "pushing" the virtual object, when getting closer to the virtual object from a horizontal direction, and determines an interaction of "squashing" the virtual object, when getting closer to the virtual object from a vertical direction, in a hand-opened posture, and controls a behavior of the virtual object to be implemented in response to the determined "push" and "squash" hand interactions, on a basis of the attribute by which executability of "push" and "squash" is set for each virtual object.

7. The information processing device according to claim 1,
wherein the control unit further determines a hand interaction that the user is trying to perform, on a basis of a speed of a positional change of the finger with respect to the virtual object.

8. The information processing device according to claim 1,
wherein the control unit determines a hand interaction of "slapping" the virtual object, when getting closer to the virtual object at a speed equal to or larger than a predetermined speed, and determines an interaction of "touching" the virtual object, when getting closer to the virtual object at a speed smaller than a predetermined speed, in a finger-opened posture, and controls a behavior of the virtual object to be implemented in response to the determined "slap" and "touch" hand interactions, on a basis of the attribute by which executability of "slap" and "touch" is set for each virtual object.

9. The information processing device according to claim 1,
wherein the control unit controls, on a basis of the attribute by which executability of a second hand interaction of a first virtual object before and after execution of a first hand interaction on the first virtual object is further set, a behavior of the first virtual object to be implemented when the user performs the second hand interaction subsequently to the first hand interaction.

10. The information processing device according to claim 1,
wherein the control unit controls, on a basis of the attribute by which executability of a first hand interaction on a second virtual object and a behavior of the second virtual object to be implemented in response to the first hand interaction are set, a behavior of the second virtual object to be implemented when the user performs the first hand interaction with respect to the second virtual object.

11. The information processing device according to claim 1,
wherein the control unit controls, on a basis of the attribute by which executability of a holding operation on a second virtual object and executability of a behavior of changing a position and a posture of the second virtual object in such a manner that a position held by the user fits with the hand of the user are set, a position and a posture of the second virtual object that are set when the user holds the second virtual object.

12. The information processing device according to claim 1,
wherein the control unit controls, on a basis of the attribute by which executability of each hand interaction with respect to each virtual object and a position at which a hand interaction is executable are set, a behavior of a certain virtual object to be implemented when the user performs a hand interaction with respect to a certain location of the virtual object.

13. The information processing device according to claim 1,
wherein the control unit further controls, on a basis of the attribute by which executability of each hand interaction with respect to each virtual object and a behavior of a user interface for a hand interaction are set, a behavior of a user interface to be implemented when the user performs a hand interaction with respect to a certain location of a certain virtual object.

14. The information processing device according to claim 1,
wherein the control unit further controls, on a basis of the attribute by which executability of each hand interaction with respect to each virtual object and a behavior of a user interface at a position at which a hand interaction is executable are set, a behavior of a user interface at a corresponding executable position that is to be implemented when the user performs a hand interaction with respect to a certain location of a certain virtual object.

15. An information processing method comprising:
an acquisition step of acquiring a position of a hand of a user and a posture of a finger; and
a control step of controlling a display operation of a display device configured to display a virtual object with being superimposed on a real space,
wherein, in the control step, a hand interaction that the user is trying to perform, and a virtual object targeted by the hand interaction are determined on a basis of the position of the hand and the posture of the finger that have been acquired in the acquisition step, and a behavior of the virtual object to be implemented in response to the hand interaction is controlled on a basis of an attribute set for the virtual object.

16. A computer program described in a computer-readable format in such a manner as to cause a computer to function as:
an acquisition unit configured to acquire a position of a hand of a user and a posture of a finger; and
a control unit configured to control a display operation of a display device configured to display a virtual object with being superimposed on a real space,
wherein the control unit determines a hand interaction that the user is trying to perform, and a virtual object targeted by the hand interaction, on a basis of the position of the hand and the posture of the finger that have been acquired by the acquisition unit, and controls a behavior of the virtual object to be implemented in response to the hand interaction, on a basis of an attribute set for the virtual object.

17. An augmented reality system comprising:
a display device configured to display a virtual object with being superimposed on a real space; and
a control unit configured to control a display operation of a display device configured to display a virtual object with being superimposed on a real space,
wherein the control unit determines a hand interaction that the user is trying to perform, and a virtual object targeted by the hand interaction, on a basis of the position of the hand and the posture of the finger that have been acquired by the acquisition unit, and controls a behavior of the virtual object to be implemented in response to the hand interaction, on a basis of an attribute set for the virtual object.
